# EUROPÄISCHE PATENTSCHRIFT

(11) **EP 2 504 259 B1**
(45) Veröffentlichungstag und Bekanntmachung des Hinweises auf die Patenterteilung: **15.06.2016**
(21) Anmeldenummer: 10776522.4
(22) Anmeldetag: 01.10.2010
(51) Int. Cl.: B65G 43/10, B65G 47/26

(54) **FÖRDEREINRICHTUNG UND VERFAHREN ZUM BETRIEB EINER FÖRDEREINRICHTUNG**
CONVEYOR DEVICE AND METHOD FOR OPERATING A CONVEYOR DEVICE
DISPOSITIF D'ACHEMINEMENT ET PROCÉDÉ POUR FAIRE FONCTIONNER UN DISPOSITIF D'ACHEMINEMENT

(30) Priorität: 02.10.2009 AT 15612009; 30.10.2009 AT 17242009; 15.01.2010 AT 502010
(43) Veröffentlichungstag der Anmeldung: 03.10.2012
(73) Patentinhaber: TGW Logistics Group GmbH, 4600 Wels (AT)
(72) Erfinder: WOLKERSTORFER, Christoph, A-4600 WeIs (AT); REISCHL, Josef, A-4623 Gunskirchen (AT); HANSL, Rudolf, A-4020 Linz (AT); WINKLER, Markus, A-4814 Altmünster (AT)
(74) Vertreter: Burger, Hannes
(86) Internationale Anmeldenummer: PCT/AT2010/000366
(87) Internationale Veröffentlichungsnummer: WO 2011/038441

(56) Entgegenhaltungen:
- EP-A1- 1 388 505
- DE-A1-102004 038 135
- DE-A1-102006 015 689
- FR-A1- 2 639 442
- US-A1- 2005 049 745
- US-B1- 6 370 447
- US-B1- 6 471 044

## Beschreibung

Die Erfindung betrifft ein Verfahren nach dem Oberbegriff des Anspruchs 1 sowie eine entsprechende Fördereinrichtung.

Fördereinrichtungen sind heutzutage weit verbreitet und beispielsweise aus keiner Lagerhalle, keiner Produktionsstätte und keinem Post- oder Gepäcksverteilsystem mehr wegzudenken. Sie dienen zum komfortablen Fördern und Sortieren von mitunter sehr schweren Lasten. Im Laufe der Zeit haben sich viele Typen von Fördereinrichtungen herausgebildet, die auf einen jeweiligen Einsatzzweck optimiert sind. Sehr häufig sind Fördereinrichtungen als Rollenförderer ausgebildet, bei denen das Fördergut durch einzelne, mit dem Fördergut temporär in Kontakt stehende, Rollen transportiert wird. Ein ebenfalls gebräuchlicher Typ ist ein Förderband oder eine Förderkette.

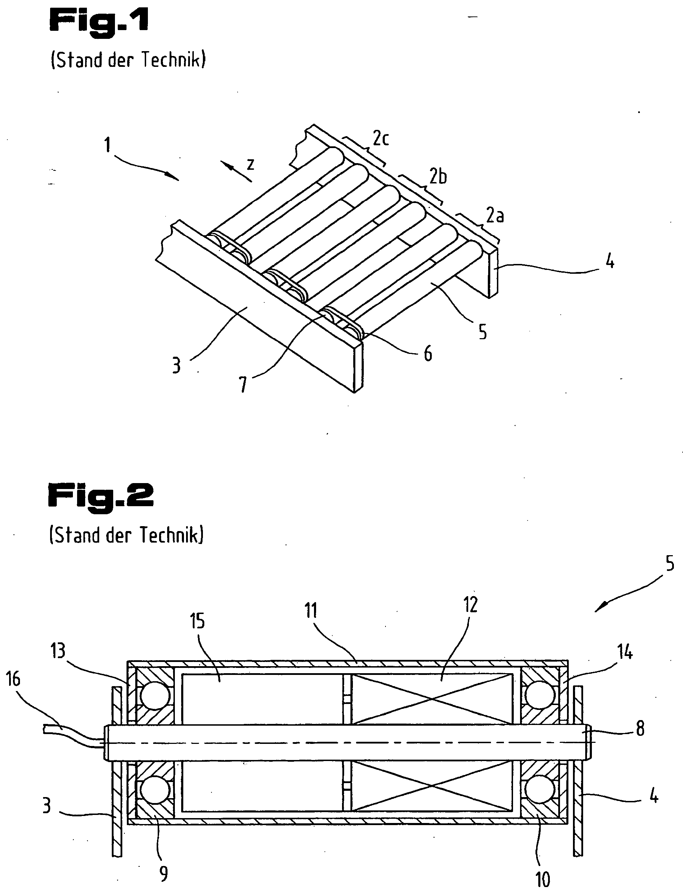

Fig. 1 zeigt beispielhaft eine Fördereinrichtung 1 nach dem Stand der Technik, konkret einen Rollenförderer. Dabei sind mehrere Antriebe 2a, 2b und 2c zwischen zwei schienenartigen Rahmenteilen 3 und 4 örtlich hintereinander angeordnet. Im gezeigten Beispiel besteht ein Antrieb 2a..2c jeweils aus einer Motorrolle 5 und einer über einen Riemen 6 damit verbundenen Hilfsrolle 7. Werden die Antriebe 2a..2c nun aktiviert, das heißt in Drehung versetzt, so wird ein Fördergut in an sich bekannter Weise in Förderrichtung z transportiert.

Fig. 2 zeigt weiterhin den Aufbau einer Motorrolle 5 nach dem Stand der Technik. Diese umfasst eine an den Rahmenteilen 3 und 4 befestigte und damit stillstehende Achse 8. Auf der Achse 8 sind zwei Lager 9 und 10 angeordnet, welche den, äußeren Mantel 11 tragen. Auf der Achse 8 ist weiterhin die Statorwicklung 12 angeordnet. Auf dem äußeren Mantel 11 befinden sich zwei Deckel 13 und 14 zum Schutz des Inneren der Motorrolle 5 gegen Staub. Schließlich ist in der Motorrolle 5 eine Antriebssteuerung 15 angeordnet, welche elektrisch mit der Statorwicklung 12 verbunden ist. Ein Anschlusskabel 16, welches mit der Antriebssteuerung 15 verbunden ist, ist durch ein Loch in der Achse 8 (nicht dargestellt) nach außen geführt.

Über das Anschlusskabel 16 empfängt die Antriebssteuerung 15 Befehle von einer übergeordneten Steuerung (nicht dargestellt). Diese Steuerung kann einzelne Motorrollen 5 und damit Antriebe 2a..2c gezielt ansteuern, d.h. sie zu einer bestimmten Drehzahl, Beschleunigung oder Verzögerung veranlassen, und so ein Fördergut flexibel über die Fördereinrichtung 1 fördern. Dabei wird von der Antriebssteuerung 15 ein Drehfeld in der Statorwicklung 12 erzeugt, welches dann den äußeren Mantel 11 antreibt. Bei dem verwendeten Motor handelt es sich um einen an sich bekannten bürstenlosen ("brushless") Motor, im Eigentlichen also um eine Synchronmaschine, welche über Gleichspannung und einen Wechselrichter angetrieben wird.

In modernen Förderanlagen werden aus energetischen Gründen und auch wegen der Lärmbelastung in aller Regel nur jene Antriebe aktiviert, die zur Förderung eines Fördergutes unbedingt nötig sind. Wird zum Beispiel ein einzelner Gegenstand transportiert, welcher in Förderrichtung fünf Rollen überdeckt, so kann eine Zone gebildet werden, die beispielsweise sechs Rollen umfasst, innerhalb derer Rollen angetrieben werden. Diese Zone wandert mit dem geförderten Gegenstand mit, sodass im vorliegenden Beispiel immer nur sechs Rollen in Betrieb sind, egal wie lange die Fördereinrichtung ist.

Beispielsweise offenbart die US 2005/0049745 A1 dazu ein gattungsgemäßes Verfahren zur Positionsbestimmung eines Objektes auf einer Fördereinrichtung, bei dem die Hinterkante eines geförderten Objektes erfasst wird. Bei Erfassung wird ein dem Objekt zugeordneter Datensatz aktualisiert.

Weiterhin zeigt die US 6,729,463 dazu eine Fördereinrichtung mit flexiblen, insbesondere auch "wandernden" Zonen. Der Förderer umfasst eine Zonen-Adress-Schnittstelle, an die eine Vielzahl von Motoren gekoppelt ist, um zumindest eine Zonen-Kontroll-Einheit zu konfigurieren. Mit dieser Anordnung ist es möglich, beliebige, hintereinander liegende Motoren anzusteuern. Mit Hilfe von Sensoren, welche aus je einem Sende- und einem Empfangselement bestehen und jeweils bei einem Motor vorgesehen sind, kann die Position eines geförderten Objektes ermittelt werden. Da Förderanlage beachtliche Ausmaße annehmen können ist daher eine Vielzahl solcher Sender/Empfängerpaare nötig. Die Förderanlage nach dem Stand der Technik ist daher teuer und aufgrund der Vielzahl an Sensoren fehlernanfällig.

Darüber hinaus zeigt die JP 7206132 einen Rollenförderer, bei dem das Fördergut mit Hilfe einer am Beginn des Rollenförderers angeordneten Lichtschranke vermessen wird. Während des Transports des Förderguts über die Rollen wird die Position desselben anhand der von den Antrieben vorgegeben Geschwindigkeit laufend ermittelt und für die individuelle Ansteuerung der Motorrollen verwendet. Nachteilig an der JP 7206132 ist, dass Störungen auf der Fördereinrichtung mangels an Sensoren nicht erkannt werden. So werden zu große oder zu kleine Abstände zwischen den Förderobjekten, die zum Beispiel dadurch entstehen, dass zwischen den zu fördernden Objekten und den Förderrollen ein Schlupf vorliegt, nicht erkannt. Desgleichen bleiben auf der Förderstrecke (ggf. unerlaubterweise) entnommene oder hinzugefügte beziehungsweise vom Förderer gefallene Objekte unentdeckt

Während die in der US 6,729,463 offenbarte Lösung wegen der hohen Anzahl an Sensoren (insbesondere bei großen Anlagen) nicht praktikabel ist, erscheint die in der JP 7206132 offenbarte Lösung wegen der vielen unentdeckt bleibenden Störungen, die in der Praxis jedoch laufend auftreten, ebenfalls wenig zielführend. Insbesondere fehlt es an einer geeigneten Methode, den Betriebs einer Fördereinrichtung zu überwachen, ohne dass hierzu jedoch eine Unmenge an Sensoren nötig wäre.

Darüber hinaus werten die genannten Lösungen nur den Belegt-Zustand eines beziehungsweise mehrerer Sensoren aus, um damit Information über den Zustand der Fördereinrichtungen zu gewinnen. Diese Lösungen eignen sich daher vorwiegend für Fördereinrichtungen, auf denen mehr oder minder idente Objekte iri gleicher Lage transportiert werden Fördereinrichtungen transportieren häufig aber auch von der Art her sehr unterschiedliche Objekte. Beispielsweise gleicht bei einem Transportsystem eines Flughafens kaum ein Koffer dem anderen. Bei den oben genannten Lösungen wird jedoch eine Menge an nützlicher Information zur Identifikation der einzelnen Objekte ignoriert. Dies führt unweigerlich dazu, dass Objekte nicht oder nicht mit hinreichender Sicherheit identifiziert werden können. Damit unmittelbar einhergehend ist die Einschränkung, dass eine Störung auf der Fördereinrichtung ebenfalls nicht oder nicht mit hinreichender Sicherheit festgestellt werden kann. Beispielsweise würde das Vertauschen zweier Koffer, die zwar gleiche Abmaße aufweisen, ansonsten aber unterschiedliche Eigenschaften aufweisen, nicht weiter auffallen, mit der unangenehmen Folge, dass Fluggäste ihr Gepäck am Zielort nicht in Empfang nehmen können.

Zur Identifikation von Objekten werden seit längerer Zeit daher auch Systeme eingesetzt, die eine zweifelsfreie Identifikation prinzipiell ermöglichen. Beispielsweise werden an Gepäcksstücken und auch an Waren aller Art Barcodes und neuerdings auch RFID-Tags (Radio Frequency Identification Tags) angebracht. Die Identifikation funktioniert in der Regel aber nur innerhalb eines geschlossenen Systems, da mit dem Barcode oder dem RFID-Tag häufig in einer Datenbank gespeicherte Daten verknüpft sind. Steht diese Datenbank nicht zur Verfügung, dann ist auch eine Identifikation nicht möglich. Beispielsweise kann eine mit einem Barcode ausgestattete Konservendose nicht von einem Gepäcksverteilsystem eines Flughafens identifiziert werden. Darüber hinaus sind sowohl Barcodes als auch RFID-Tags häufig nur in einer bestimmten Lage oder bestimmten Lagen der Förderobjekte lesbar. Liegt das Förderobjekt unvorteilhaft auf der Fördereinrichtung, so kann es nicht identifiziert werden.

Aus diesem Grund werden seit einiger Zeit auch Systeme eingesetzt, welche eine Identifikation von Objekten basierend auf den ihnen eigenen Eigenschaften ermöglicht. Ein populäres Beispiel dafür ist die Bildverarbeitung, also die Identifikation eines Objekts aufgrund seiner äußeren Erscheinung. Bekannt ist auch, das Gewicht eines Objektes zu seiner Identifikation heranzuziehen.

Aus der DE 10 2007 035 272 A1 ist dazu beispielsweise ein System zur Identifikation von Gepäcksstücken bekannt, die mit einem Barcode oder einem RFID-Tag versehen werden. Zusätzlich werden Merkmale der Gepäcksstücke erfasst, um diese auch dann identifizieren zu können, wenn der Barcode oder der RFID-Tag nicht ausgelesen werden kann.

Nachteilig an diesen Systemen ist die Unmenge an Daten, die für die Identifikation von Objekten verarbeitet werden muss. Bedenkt man, dass beispielsweise am Frankfurter Flughäfen rund 54 Millionen Fluggäste pro Jahr befördert werden und nimmt man an, dass jeder Fluggast zumindest ein Gepäcksstück eincheckt, dann resultiert daraus die Anzahl von rund 150.000 Koffern, die vom Gepäcksverteilsystem pro Tag verarbeitet werden muss. Es ist leicht einsehbar, dass schon bei Verwendung einer mäßigen Bildauflösung für ein Bildverarbeitungssystem extrem leistungsstarke Computersysteme für die Identifikation von Objekten nötig sind.

Aus all dem Gesagten wird klar, dass es trotz aller Bemühungen nach wie vor an einer Möglichkeit fehlt, Fördereinrichtungen mit einem vertretbaren technischen und finanzielle Aufwand zu überwachen, ohne dabei Einschränkungen hinsichtlich der Sicherheit, mit der ein Fehler in der Fördereinrichtung detektiert wird, hinnehmen zu müssen.

Aufgabe der Erfindung ist es daher, eine verbesserte Fördereinrichtung und ein verbessertes Verfahren zum Betrieb einer Fördereinrichtung anzugeben, insbesondere um die Überwachung des Betriebs einer Fördereinrichtung mit geringem technischen Aufwand und dennoch sicherer Fehlererkennung zu ermöglichten.

Die Aufgabe der Erfindung wird mit einem Verfahren nach Anspruch 1 gelöst.

Die Aufgabe der Erfindung wird weiterhin mit einer Fördereinrichtung nach Anspruch 15 gelöst.

Erfindungsgemäß werden also sowohl die Übereinstimmung einer Objekteigenschaft als auch die mutmaßliche Position der Objekte miteinander verknüpft, um einen Fehler in der Fördereinrichtung festzustellen. Dabei wird an einer ersten Position (z.B. zu Beginn der Fördereinrichtung) zumindest ein erster Wert zumindest einer physikalischen Eigenschaft eines Objekts erfasst, beispielsweise dessen optisches Reflexionsverhalten. Selbstverständlich ist auch die Erfassung verschiedener Werte ein und derselben physikalischen Eigenschaft (z.B. das Reflexionsverhalten an mehreren Stellen des Objektes) oder auch die Erfassung verschiedener Werte verschiedener Eigenschaften möglich. Beispielsweise können zum Reflexionsverhalten des Objektes noch dessen Länge und dessen Gewicht erfasst werden. All diese Werte stellen eine "Signatur" des Objektes dar, die mehr oder weniger komplex aufgebaut sein kann. Der zumindest eine erste Wert zumindest einer physikalischen Eigenschaft kann somit auch eine Menge an Werten einer Menge an Eigenschaften sein, z.B. drei an verschiedenen Stellen des Objektes aufgenommene Werte für die Farbe Rot, die Länge des Objektes sowie das Gewicht des Objektes. Die beispielhafte Menge: Rot= 56, 34, 254; Länge=0,54m, Gewicht=0.73 kg. Ist somit gleichbedeutend mit der Signatur eines Objektes.

An einer zweiten Position wird auf ähnliche Weise ein zweiter Wert beziehungsweise eine zweite Signatur erfasst. Im Rahmen einer Plausibilitätsprüfung werden diese beiden Werte oder Signaturen hinsichtlich ihrer Übereinstimmung geprüft. Zusätzlich wird geprüft, ob die mutmaßlich erfolgte Ortsveränderung des Objekts basierend auf dem über die Antriebe vorgegebenen Soll-Weg und/oder der über die Antriebe vorgegebenen Soll-Geschwindigkeit in Verbindung mit der Erfassungszeitspanne übereinstimmt. Durch die Antriebe der Fördereinrichtung ist ja ein bestimmter Soll-Weg beziehungsweise eine bestimmte Soll-Geschwindigkeit der Objekte vorgegeben. Diese Parameter stimmen nicht zwangsläufig mit Ist-Weg beziehungsweise Ist-Geschwindigkeit der Objekte überein, denn Schlupf zwischen den Antrieben und den Förderobjekten, Fehler oder Ungenauigkeiten in der Antriebssteuerung, beziehungsweise unerlaubterweise entnommene oder hinzugefügte Objekte können zu Abweichungen zwischen den Soll-Werten und den Ist-Werten führen. Dennoch sind diese Soll-Werte - da sie in den allermeisten Fällen im Wesentlichen mit den Ist-Werten übereinstimmen - eine wertvolle Informationsquelle.

Stimmen nun die beiden ermittelten Signaturen überein und ist diese Übereinstimmung auch im Hinblick auf die mutmaßlich erfolgte Ortsveränderung des Objekts plausibel, so kann davon ausgegangen werden, dass die Fördereinrichtung störungsfrei arbeitet. Umgekehrt lässt ein abweichender Ausgang der Plausibilitätsprüfung auf eine Störung in der Fördereinrichtung schließen.

Vorteilhaft braucht die an der zweiten Position erfasste Signatur nicht mit allen an der ersten Position erfassten Signaturen verglichen werden (das wären am Frankfurter Flughafen wohl einige zig-tausend) sondern nur mit einige wenigen, nämlich mit denen, die ungefähr zu der mutmaßlich erfolgten Ortsveränderung des Objekts passen.

Mit vergleichsweise geringem technischen Aufwand kann somit gepriift werden, ob die tatsächlichen Verhältnisse auf der Fördereinrichtung noch hinreichend genau den erwarteten Verhältnissen entsprechen, d.h. das virtuelle Abbild der Fördereinrichtung in einer Steuerung derselben noch hinreichend genau den realen Verhältnissen auf der Fördereinrichtung entspricht. Auf diese Weise können Störungen im Betrieb der Fördereinrichtung relativ früh erkannt und auch behoben werden, sodass sich Störungen, die isoliert betrachtet vielleicht sogar an sich harmlos sind, nicht akkumulieren und möglicherweise zu einem Totalausfall der Fördereinrichtung führen können. Mit dieser Lösung werden gleich mehrere Nachteile des Standes der Technik überwunden:
- Ein Fehler in der Fördereinrichtung kann mit wesentlich höherer Sicherheit festgestellt werden als in Systemen nach dem Stand der Technik, bei denen nur die Soll-Position eines Objektes für diesen Zweck ausgewertet wird. Wie eingangs erwähnt bleiben bei diesen Systemen zu große oder zu kleine Abstände zwischen den Förderobjekten, die zum Beispiel dadurch entstehen, dass zwischen den zu fördernden Objekten und den Förderrollen ein Schlupf vorliegt, nicht erkannt. Desgleichen bleiben auf der Förderstrecke (ggf. unerlaubterweise) entnommene oder hinzugefügte beziehungsweise vom Förderer gefallene Objekte unentdeckt.
- Eine Fördereinrichtung kann mit einer deutlich geringeren Anzahl an Sensoren überwacht werden als in Systemen nach dem Stand der Technik, bei denen bei jeder Antriebsrolle ein Sensor vorgesehen wird. Wie erwähnt können Förderanlagen beachtliche Ausmaße annehmen, weswegen bei dieser Lösung eine Vielzahl an Sensoren nötig ist. Diese Art der Förderanlage nach dem Stand der Technik ist daher teuer und aufgrund der Vielzahl an Sensoren fehlernanfällig.
- Das Versehen der zu fördernden Objekte mit einem Barcode oder einem RFID-Tag kann unterbleiben, da für die erfindungsgemäße Plausibilitätsprüfung objektbezogene Eigenschaften herangezogen werden. Damit wird das bereits erwähnte, bei nach dem Stand der Technik bekannten Fördersystemen häufig auftretende Problem überwunden, dass der Barcode oder der RFID-Tag nur in bestimmten Lagen des Objekts erfasst werden kann. Liegt das Förderobjekt unvorteilhaft auf der Fördereinrichtung, so kann es nicht identifiziert werden. Außerdem werden Probleme bei der Identifikation vermieden, die daher rühren, dass die Identifikation in der Regel nur innerhalb eines geschlossenen Systems funktioniert, da mit dem Barcode oder dem RFID-Tag häufig in einer Datenbank gespeicherte Daten verknüpft sind.
- Schließlich kann die Plausibilitätsprüfung mit einer deutlich geringeren Menge an Daten erfolgen als dies in Systemen nach dem Stand der Technik der Fall ist, bei denen die Identifikation rein auf der Verarbeitung objektbezogener Eigenschaften basiert, also beispielsweise Systemen, die rein mit Bildverarbeitung arbeiten. Durch die Verknüpfung mit ortsbezogener Information über die Objekte, die aus der Antriebssteuerung gewonnen werden, kann die zu verarbeitende Datenmenge signifikant reduziert werden. Dennoch wird wichtige Information über die Objekte nicht verworfen, wie dies beispielsweise bei Systemen der Fall ist, die mit Lichtschranken bloß die Anwesenheit (irgend)eines Objektes erfassen. Die erfindungsgemäße Plausibilitätsprüfung kann daher mit deutlich geringerem technischen Aufwand erfolgen, ohne dabei auf eine sichere Fehlererkennung verzichten zu müssen.

Die Erfindung kann schließlich auch darin gesehen werden, die Notwendigkeit einer Überwachung des ordnungsgemäßen Betriebs einer Fördereinrichtung zu erkennen, obwohl diese beispielsweise ohnehin allein mit Hilfe des von den Antrieben vorgegebenen Soll-Wegs beziehungsweise der vorgegebenen Soll-Geschwindigkeit betrieben werden kann.

Wie erwähnt können erste Werte einer Objekteigenschaft an einer ersten Position ermittelt werden. In einer weiteren Ausführungsform der Erfindung werden diese Werte von einer Steuerung jedoch nicht ermittelt sondern vorgegeben. Beispielsweise ist denkbar, dass die entsprechenden Daten aus einer anderen Quelle bekannt sind und vorab an die Fördereinrichtung übermittelt werden. Eine andere Möglichkeit wäre auch, dass die Daten während einer früheren Verarbeitung gleichartiger Objekte gespeichert wurden und nun bloß einfach wieder aus einer Datenbank aufgerufen werden.

Schließlich wird darauf hingewiesen, dass unter einer "Fördereinrichtung" alle denkmöglichen Vorrichtungen zum Transport von Objekten zu verstehen sind. Insbesondere kann eine Fördereinrichtung auch aus Abschnitten zusammengesetzt sein, innerhalb derer die Förderung von Objekten auf unterschiedliche Art und Weise erfolgt. Beispielsweise kann sich an einen Vertikalförderer, welcher ein Objekt aus einem Hochregallager entnimmt, ein Förderband anschließen, daran ein Drehtisch usw. Beispiele für verschiedene Fördereinrichtungen sind Kettenförderer, Förderbänder, Rollenförderer, Hubtische, Drehtische, Umsetzer, Verschiebewagen, Vertikalförderer sowie fahrerlose Transportfahrzeuge, usw.

Vorteilhafte Ausgestaltungen und Weiterbildungen der Erfindung ergeben sich aus den Unteransprüchen sowie aus der Beschreibung in Zusammenschau mit den Figuren der Zeichnung.

Besonders vorteilhaft ist es, wenn ein Teilen oder Zusammenführen von Objekt-Strömen an einem Knoten der Fördereinrichtung bei der Plausibilitätsprüfung berücksichtigt wird. Werden beispielsweise Objekt-Ströme an einem Knoten zusammengeführt, so sind für eine nachfolgende zweite Überprüfungsposition die Signaturen von zwei öder sogar mehreren vorgelagerten ersten Erfassungspositionen relevant. Mit dieser Variante der Erfindung kann sichergestellt werden, dass nicht irrtümlicherweise ein Fehleralarm ausgelöst wird, wenn nur die Signaturdaten eines mehrerer möglicher Förderzweige ausgewertet wird. Bei Verzweigungen sind die Verhältnisse entsprechend umgekehrt.

Vorteilhaft ist es weiterhin, wenn in einem Initialisierungsschritt ein Initialisierungswert der zumindest einen physikalischen Eigenschaft bestimmt wird und ein Erfassungsbereich, in dem die zumindest eine physikalische Eigenschaft erfasst wird, als von einem Objekt belegt klassifiziert wird, wenn die Abweichung zwischen dem ersten/zweiten Wert vom Initialisierungswert größer ist als ein vorgebbarer Schwellwert. Auf diese Weise kann ein Belegungszustand eines Erfassungsbereichs bestimmt werden. Ein "Belegungszustand" im Sinne der Erfindung ist eine Aussage darüber, ob eine Position oder ein Erfassungsbereich eines Sensors von einem Objekt belegt ist oder nicht belegt ist. Auf diese Weise können zum Beispiel Lichtschranken, die häufig für diese Funktion eingesetzt werden, eingespart und zum Beispiel durch eine ohnehin benötigte Video-Kamera ersetzt werden, die somit einen Doppelnutzen erbringt. Dabei sollte auch darauf geachtet werden, dass bewegte Teile der Fördereinrichtung selbst nicht zu einer Verfälschung des Belegungszustands führen. Beispielsweise könnte eine Video-Kamera, welche den Förderstrom bildlich erfasst, eine verschmutzte Stelle eines Förderbandes oder die sich drehenden Rollen eines Rollenförderers unter Umständen irrtümlicherweise als Objekt interpretieren. Vorteilhaft werden diese an sich auch bei nicht belegter Fördereinrichtung vorkommenden Schwankungen der Messwerte, welche durch die bewegten Teile der Fördereinrichtung selbst resultieren, entsprechend berücksichtigt beziehungsweise herausgerechnet.

Für die Ermittlung eines Belegungszustandes sind prinzipiell aber auch vergleichsweise einfach aufgebaute Sensoren denkbar. Beispielsweise können hierfür Lichtschranken mit und ohne Reflektor, einfache mechanische Schalter, welche durch die Objekte betätigt werden, Ultraschall-Sensoren, Laser, Radar-Sensoren, kapazitive Sensoren und Infrarot-Sensoren verwendet werden. Diese Sensoren eignen sich im Zusammenspiel mit dem von den Antrieben vorgegebenen Soll-Weg beziehungsweise mit der von den Antrieben vorgegebenen Soll-Geschwindigkeit insbesondere auch für die Ermittlung der Länge eines Objektes.

Vorteilhaft ist es weiterhin, wenn der Sensor dazu vorbereitet ist, einen Belegungszustand anhand einer vom Antrieb abgegebenen Kraft oder einer davon abhängigen Größe zu ermitteln. Wenn ein Objekt in Kontakt mit einem Antrieb (z.B. einer Förderrolle) kommt, so geht dies in aller Regel mit einer Änderung der vom Antrieb abgegebenen Kraft beziehungsweise des abgegebenen Drehmoments einher. Dies kann in an sich bekannter Weise beispielsweise mit Hilfe von Dehnmeßstreifen oder Piezo-Sensoren gemessen werden. Aber auch eine indirekte Messung über den vom Motor aufgenommenen Strom ist natürlich möglich. Ändert sich der Strom in vordefinierter Weise, so ändert sich auch der Belegungszustand des Antriebs. Denkbar ist dabei auch, dass jeder Antrieb über eine solche Prüfmöglichkeit verfügt. Zwar werden bei dieser Variante prinzipiell keine "externen" Sensoren wie zum Beispiel Lichtschranken benötigt, jedoch ist das genannte Messprinzip bei sehr leichten Objekten nur mehr bedingt einsetzbar, da bereits geringe Stromschwankungen zu Fehlinterpretationen über die Anwesenheit eines Objekts führen können. Bei einer Lichtschranke spielt das Gewicht eines Objektes dagegen keine Rolle. In einer vorteilhaften Variante werden daher verschiedene Sensorsysteme kombiniert, beispielsweise um zu überprüfen, ob deren Ergebnisse schlüssig sind.

Günstig ist es auch, wenn die Plausibilitätsprüfung nicht auf Objekt-Identität sondern auf Objekt-Gleichartigkeit durchgeführt wird. Werden auf einer Fördereinrichtung viele oder lauter gleichartige Objekte transportiert, so ist eine genaue Identifikation eines bestimmten Objekts in der Regel nicht erforderlich. Es ist normalerweise ausreichend, wenn für die Plausibilitätsprüfung die Gleichartigkeit von Objekten festgestellt wird. Das erfindungsgemäße Verfahren kann somit dahingehend vereinfacht werden, dass an der ersten Position eine Referenz-Signatur erfasst oder diese von einer Steuerung vorgegeben wird. Der Vollständigkeit halber sei darauf hingewiesen, dass auch im Betriebsmodus "Prüfung auf Objekt-Identität" de facto auf Objekt-Gleichartigkeit geprüft wird, denn ein Vertauschen zweier gleichartiger Objekte wird durch das erfindungsgemäße Verfahren systembedingt nicht erkannt.

In obigem Zusammenhang ist es auch vorteilhaft, wenn aus den Belegungszuständen eine Anzahl von Objekten, welche den Erfassungsbereich passieren, ermittelt wird und die Plausibilitätsprüfung auf Basis der Anzahl gleichartiger Objekte durchgeführt wird Auf diese Weise kann mit sehr geringem technischen Aufwand eine Betriebsstörung der Fördereinrichtung detektiert werden.

Günstig ist es, wenn die Antriebe von einer Antriebssteuerung gesteuert oder geregelt werden und dass anstelle des von den Antrieben vorgegebenen Soll-Wegs und/oder der von den Antrieben vorgegebenen Soll-Geschwindigkeit der von der Antriebssteuerung vorgegebene Soll-Weg und/oder die von der Antriebssteuerung vorgegebene Soll-Geschwindigkeit für die Plausibilitätsprüfung herangezogen wird. Zwar ist der Antrieb als solcher die letzte Schnittstelle zwischen Fördereinrichtung und Förderobjekt, an der eine Abweichung zwischen Soll-Weg und Ist-Weg, beziehungsweise zwischen Soll-Geschwindigkeit und Ist-Geschwindigkeit auftreten kann, jedoch können auch Vorgaben einer Antriebssteuerung oder Vorgaben einer übergeordneten Steuerung an die Antriebssteuerung für die Plausibilitätsprüfung herangezogen werden. Dabei muss allerdings berücksichtigt werden, dass das Risiko einer Abweichung zwischen Soll-Werten und Ist-Werten mit zunehmender Abstraktionsebene steigt. Das heißt, dass der Antrieb als solcher relativ verlässliche Angaben liefert, wohingegen die von einer übergeordneten Steuerung an einen Antrieb übermittelten Steuerdaten beispielsweise auch auf dem Übermittlungsweg verfälscht werden können. Allerdings sind die benötigten Daten auf einer höheren Ebene der Steuerung in der Regel einfacher verfügbar.

Vorteilhaft ist es, wenn
- die erste Position am Beginn und die zweite Position am Ende der Fördereinrichtung vorgesehen sind und/oder wenn
- weitere erste Positionen und/oder weitere zweite Position vor und/oder nach einem Knoten der Fördereinrichtung vorgesehen sind.

Auf diese Weise wird die Überprüfung auf neuralgische Punkte konzentriert, denn es sind gerade die Knoten, d.h. die Aufteilung in mehrere Förderstränge oder das Zusammenführen derselben, jene Stellen, an denen die Gefahr für Betriebsstörungen besonders groß ist. Vorteilhaft ist es auch, wenn die Signaturen der Objekte gleich zu Beginn der Fördereinrichtung erfasst werden, um möglichst früh die Möglichkeit einer Fehlererfassung zu haben. Desgleichen ist es vorteilhaft, wenn der ordnungsgemäße Betrieb einer Fördereinrichtung am Ende derselben ermittelt wird. Das Ergebnis kann dann an eine nachfolgende Förder- oder Manipulationseinheit übermittelt werden, die im Fehlerfall entsprechende Gegenmaßnahmen einleiten kann. Die zweite Position muss dabei nicht an der letzten möglichen Stelle der Fördereinrichtung angeordnet sein. Es genügt, wenn sich die genannte Position im Endbereich der Fördereinrichtung befindet. Häufig werden Förderanlage auch in mehrere Teilabschnitte gegliedert um den Betrieb der Anlage zu vereinfachen. Die Erfindung kann nun vorteilhaft dazu eingesetzt werden, zwischen den Teilabschnitten insofern Klarheit herzustellen, als dass an der Schnittstelle zwischen zwei Teilabschnitten für die Prüfung der Fördereinrichtung gesorgt wird, sodass zumindest zu Beginn eines Teilabschnitts geordnete Verhältnisse vorliegen.

Vorteilhaft ist es in diesem Zusammenhand auch, wenn die zweite Position soweit vor dem Ende der Fördereinrichtung angeordnet, dass eine Korrekter eines aufgetreten Fehlers innerhalb der Fördereinrichtung noch möglich ist. Eine nachfolgende Förder- oder Manipulationseinheit kann dann davon ausgehen, dass eine geforderte Abfolge von Objekten an der Übergabestelle eingehalten wird. Dies ist insbesondere dann von großem Vorteil, wenn Fördereinrichtungen und/oder Manipulatoren verschiedener Hersteller zu einer Förderanlage kombiniert werden, denn es kann a priori nicht davon ausgegangen werden, dass jede Fördereinrichtung oder jeder Manipulator Objekte, zwischen denen beispielsweise ein bestimmter Abstand nicht mehr vorliegt, oder Objekte, deren Reihenfolge vertauscht wurde, noch korrekt handhaben kann.

Günstig ist es für das erfindungsgemäße Verfahren weiterhin, wenn als physikalische Eigenschaft eine oder mehrere der Eigenschaften: Länge, Breite, Höhe, Gewicht, Form, Oberflächenbeschaffenheit, Farbe, Farbmuster, Hell/Dunkelmuster, Transmissionsgrad für elektromagnetische Wellen, Reflexionsgrad für elektromagnetische Wellen, elektrische Leitfähigkeit, magnetische Leitfähigkeit (Permeabilität), Transmissionsgrad für Schallwellen, Reflexionsgrad für Schallwellen, Elastizität, vom Antrieb abgegebenen Kraft oder eine davon abhängige Größe herangezogen werden. Diese Auzählung stellt einen Ausschnitt aus den vielfältigen Möglichkeiten dar, ein Objekt zu charakterisieren. Vorteilhaft können die aufgeführten Eigenschaften zumeist berührungslos ermittelt werden und eignen sich deswegen besonders gut für die Zwecke der Überwachung einer Fördereinrichtung. Beispielsweise kann ein Hell/Dunkelmuster in an sich bekannter Weise durch eine Schwarz-Weiß-Kamera erfasst werden. Das Gewicht kann wiederum in bekannter Weise durch Gewichtssensoren erfasst werden oder auch mit Hilfe einer Kraft, welche von den mit dem betreffenden Objekt in Kontakt stehenden Antrieben abgegeben wird, insbesondere in Steigstrecken. Auch der von den Antrieben aufgenommene Strom kann dazu herangezogen werden. Schließlich kann beispielsweise die elektrische Leitfähigkeit durch zwei beidseits der Fördereinrichtung angeordnete, elektrisch geladene Platten ermittelt werden. Die Erfassung einer Signatur eines Objektes, beziehungsweise Messmethoden zur Erfassung verschiedener physikalischer Eigenschaften sind prinzipiell bekannt, weswegen an dieser Stelle auf die ausführliche Erklärung derselben verzichtet wird. Ergänzend wird jedoch hinzugefügt, dass die Erfassung eines Barcodes oder eines RFID-Tags im Rahmen dieser Erfindung ebenfalls als Erfassung einer physikalischen Eigenschaft eines Objekts verstanden wird. Beispielsweise stellt ein Barcode - auch ohne dessen genauen Sinngehalt zu kennen - in der Regel ein einzigartiges optisches Erkennungsmerkmal eines Objekts dar. Desgleichen wird ein Objekt auch durch die auf einem RFID-Tag gespeicherten Daten charakterisiert, auch wenn deren Sinngehalt nur durch eine (unter Umständen nicht zur Verfügung stehende) Datenbank erhalten werden kann.

Günstig ist es, wenn elektromagnetische Wellen im sichtbaren Wellenlängenbereich verwendet werden und eine oder mehrere der Eigenschaften: Grauwert, Farbe, Schwarz-Weiß-Abbild, Grauwert-Abbild, Farb-Abbild des zumindest einen Objekts vorgesehen sind. Bei dieser Variante wird also das optische Erscheinungsbild eines Objektes für seine Signatur herangezogen. Dabei können einfache Eigenschaften, wie dessen (gemittelter) Grauwert oder dessen (gemittelte) Farbe, aber auch komplexere Eigenschaften wie dessen Abbild verarbeitet werden. Dafür stehen prinzipiell Helligkeitssensoren, Farbsensoren sowie Kameras zur Verfügung.

Günstig ist es weiterhin, wenn elektromagnetische Wellen im nicht sichtbaren Wellenlängenbereich verwendet werden und eine oder mehrere der Eigenschaften: Grauwert, Farbe, Schwarz-Weiß-Abbild, Grauwert-Abbild, Farb-Abbild des zumindest einen Objekts vorgesehen sind. Ähnlich wie im optischen Bereich kann das Erscheinungsbild eines Objektes auch im nicht sichtbaren Bereich, beispielsweise im Infrarot- oder Ultraviolett-Bereich verwertet werden. Dabei wird die Bildinformation vom nicht sichtbaren in den sichtbaren Bereich umgewandelt und dort als beispielsweise Grauwert-Bild des Objektes dargestellt. Der Vollständigkeit halber wird erwähnt, dass den verschiedenen Temperaturbereichen bei einem Infrarotbild zwar auch verschiedene Farben zugeordnet werden können, jedoch handelt es sich hier nicht um ein Farbbild im eigentlichen Sinn. Während bei einem Farbbild jeder Bildpunkt aus einer Mixtur verschiedener Wellenlängenanteile besteht, wird bei einem Thermobild einer bestimmten nicht sichtbaren Wellenlänge eine Farbe zugeordnet.

Besonders vorteilhaft ist es, wenn ein negativer Ausgang der Plausibilitätsprüfung die Anzeige erster Bilddaten, welche zu diesem negativen Ausgang geführt haben oder solchen Werten zugeordnet sind, sowie die Anzeige zweiter Bilddaten, welche benachbart zu den ersten Bilddaten sind, bewirkt. Wie bereits erwähnt kann eine Abweichung von Werten, die an einer ersten und an einer zweiten Position ermittelt wurden, zu einem negativen Ausgang der Plausibilitätsprüfung führen. Diese Werte können beispielsweise Bilddaten repräsentieren. In einem solchen Fall führt eine Abweichung von Bilddaten zwischen erster und zweiter Position, die für die Plausibilitätsprüfung untersucht werden, zu einem negativen Ausgang derselben. Das Auftreten einer solchen Abweichung kann dabei einer bestimmten Stelle oder einem bestimmten Bereich im Objektstrom und damit einer bestimmten Stelle oder einem bestimmten Bereich in den erfassten Video-Daten zugeordnet werden. Dies ist auch dann möglich, wenn alternativ andere Werte anderer Objekteigenschaften (beispielsweise eine Abweichung des Gewichts) zu einem negativen Ausgang der Prüfung führen, jedoch laufend Videodaten erfasst werden und mit dem Auftreten des genannten Fehlers synchronisiert werden. Entsprechend dieser Variante der Erfindung, werden nun Bilddaten von der Fehlerstelle und Bilddaten in einer Umgebung der Fehlerstelle (benachbarte Bilddaten) angezeigt. Auf diese Weise können Betriebsstörungen, die nicht durch die Fördereinrichtung selbst behoben werden können sondern eines Eingriffs einer Bedienperson der Fördereinrichtung bedürfen, leicht behoben werden (solche Störungen können beispielsweise ungewollt gestaute Objekte sein, die wieder vereinzelt werden müssen). Für die Bedienperson ist normalerweise nicht ohne weiteres erkennbar, wo genau der Fehler aufgetreten ist, wie der Ist-Zustand der Fördereinrichtung ist und wie der Soll-Zustand der Fördereinrichtung sein sollte. Aus diesem Grund ist es vorteilhaft, die "Umgebung" der Position, an, der ein Fehler detektiert wurde, zu visualisieren. Auf diese Weise wird für den Maschinenführer rasch erkennbar, wo der Fehler aufgetreten ist und welcher Ist-Zustand der Fördereinrichtung vorliegt. In einer besonders vorteilhaften Variante der Erfindung wird dem Ist-Zustand auch der Soll-Zustand gegenübergestellt. Beispielsweise können hierzu an der zweiten Position erfasste Videodaten in einem Zeitraum von ± 2 Sekunden nach dem Auftreten eines Fehlers angezeigt werden. Diesem Bild werden an der ersten Position erfasste Videodaten, welche mit der mutmaßlich erfolgten Ortsveränderung des als fehlerhaft erkannten Objektes korrelieren, gegenübergestellt. Auf diese Weise kann ein Maschinenführer durch Vergleich der Bilder sehr rasch herausfinden, welcher Art der Fehler ist und weitere Maßnahmen einleiten. Bevorzugt werden die fraglichen Objekte an einen sogenannten "Klärplatz" befahren, an dem die gewünschte Ordnung wieder hergestellt wird. An dieser Stelle wird angemerkt, dass die erwähnte Anzeige von Bilddaten auch unabhängig von anderen Merkmalen die Basis einer eigenständigen Erfindung bilden kann.

Besonders vorteilhaft ist es auch, wenn die Plausibilitätsprüfung folgende Schritte umfasst:
- Vergleichen des zumindest einen ersten Wertes mit einem zweiten Wert und
- Einleiten einer Fehlerbehandlung, wenn:
   a1) der durch die Antriebe vorgegebene, in der Erfassungszeitspanne zwischen der Erfassung zweier im Wesentlichen gleicher Werte zurückgelegte Soll-Weg der Objekte nicht im Wesentlichen dem Erfassungsabstand entspricht und/oder
   a2) zwei Werte nicht im Wesentlichen gleich sind, zwischen deren Erfassung eine Erfassungszeitspanne liegt, in der die Objekte einen durch die Antriebe vorgegebenen Soll-Weg zurückgelegt haben sollten, der im Wesentlichen dem Erfassungsabstand entspricht und/oder
   b1) die Erfassungszeitspanne zwischen der Erfassung zweier im Wesentlichen gleicher Werte nicht im Wesentlichen der Zeitspanne entspricht, die durch die Soll-Geschwindigkeit der Antriebe dividiert durch den Erfassungsabstand gegeben ist, und/oder
   b2) zwei Werte nicht im Wesentlichen gleich sind, zwischen deren Erfassung eine Erfassungszeitspanne liegt, die im Wesentlichen der Soll-Geschwindigkeit der Antriebe dividiert durch den Erfassungsabstand entspricht.

Die Optionen a1) bis b2) stellen vier Möglichkeiten zur Durchführung der Plausibilitätsprüfung dar, wobei die Möglichkeiten a1) und a2) auf der Auswertung des Soll-Weges und die Möglichkeiten b1) und b2) auf der Auswertung der Soll-Geschwindigkeit basieren. Eine weitere Einteilung kann in a1) und b1) sowie in a2) und b2) erfolgen. Während bei a1) und b1) geprüft wird, ob die mutmaßliche Ortsveränderung eines Objektes zu zwei im Wesentlichen gleichen Werten passt, wird bei a2) und b2) geprüft, ob zwei einer mutmaßlichen Ortsveränderung entsprechenden Werte auch tatsächlich im Wesentlichen gleich sind. Die genannten Optionen stellen nur einige der prinzipiell möglichen Ausgestaltungen einer Plausibilitätsprüfung dar. Selbstverständlich sind hier auch noch andere Varianten denkbar.

Vorteilhaft ist es in diesem Zusammenhang, wenn eine Fehlerbehandlung eingeleitet wird, wenn
a1) die Abweichung des durch die Antriebe vorgegebenen, in der Erfassungszeitspanne zwischen der Erfassung zweier Werte, deren Abweichung voneinander innerhalb eines vorgebbaren Bereichs liegt, zurückgelegten Soll-Wegs der Objekte von dem Erfassungsabstand außerhalb eines weiteren vorgebbaren Bereichs liegt und/oder
a2) die Abweichung zweier Werte nicht innerhalb eines vorgebbaren Bereichs liegt, zwischen deren Erfassung eine Erfassungszeitspanne liegt, in der die Objekte einen durch die Antriebe vorgegebenen Soll-Weg zurückgelegt haben sollten, dessen Abweichung vom Erfassungsabstand innerhalb eines vorgebbaren weiteren Bereichs liegt und/oder
b1) die Abweichung einer ersten Erfassungszeitspanne zwischen zwei Erfassungs-Zeitpunkten zweier Werte, deren Abweichung voneinander innerhalb eines vorgebbaren Bereichs liegt, von einer zweiten Zeitspanne, die der Soll-Geschwindigkeit der Antriebe dividiert durch den Erfassungsabstand entspricht, außerhalb eines weiteren vorgebbaren Bereichs liegt und/oder
b2) die Abweichung zweier Werte nicht innerhalb eines vorgebbaren Bereichs liegt, zwischen deren Erfassungszeitpunkten eine Erfassungszeitspanne liegt, deren Abweichung von einer zweiten Zeitspanne, welche der Soll-Geschwindigkeit der Antriebe dividiert durch den Erfassungsabstand entspricht, innerhalb eines vorgebbaren weiteren Bereichs liegt.

Diese Variante der Erfindung ist der zuvor genannten Variante sehr ähnlich, allerdings ist hier eine konkrete Möglichkeit angegeben, "im Wesentlichen" übereinstimmende Werte festzustellen. Dabei werden für jede der Optionen a1) bis b2) zulässige Abweichungen definiert. Werden einige oder alle der Optionen a1) bis b2) kombiniert, so können auch mehrere solcher zulässigen Abweichungen definiert werden.

In einer besonders vorteilhaften Variante der Erfindung werden für die Plausibilitätsprüfung zusätzlich Routing-Daten der Objekte herangezogen und es wird das Einleiten einer Fehlerbehandlung trotz Vorliegen eines Verhalten nach a1), a2), b1) oder b2) unterdrückt, wenn zwischen der ersten Position und der zweiten Position ein Knoten der Fördereinrichtung liegt und ein solches Verhalten aufgrund der Routing-Daten vorhersehbar war. "Routing-Daten" sind Informationen darüber, welches Objekt auf welchem Weg durch die Fördereinrichtung transportiert werden soll. Beispielsweise kann ein Objekt eine Fördereinrichtung an einer Ausschleuseeinrichtung planmäßig verlassen. An einer nachfolgenden Überprüfüngsposition der Fördereinrichtung kann die dem Objekt zugeordnete Signatur natürlich nicht mehr festgestellt werden. Da es sich aber um ein "planmäßiges Fehlen" handelt, wird eine Fehlerbehandlung unterdrückt. Entsprechend ist zu verfahren, wenn dem Förderstrom ein Objekt beispielsweise an einer Einschleusevorrichtung planmäßig hinzugefügt wird. Ein unbefugtes Entnehmen oder Hinzufügen eines Objektes, beispielsweise durch das mit dem Betrieb der Fördereinrichtung betraute Personal, löst dagegen nach wie vor einen Alarm aus.

Günstig ist es weiterhin, wenn das Einleiten einer Fehlerbehandlung erst dann erfolgt, wenn wiederholt ein Verhalten nach a1), a2), b1) oder b2) festgestellt wird. Auf diese Weise kann verhindert werden, dass einzelne Meß-Ausreißer zu einer Fehlerbehandlung führen. Insbesondere wenn vor und nach dem negativen Ausgang der Plausibilitätsprüfung keine weiteren Fehler festgestellt werden, kann unter Umständen nach wie vor von einem ordnungsgemäßen Betrieb der Fördereinrichtung ausgegangen werden. Erst wenn sich die Fehler häufen, wird eine Fehlerbehandlung ausgelöst. Dabei kann beispielsweise eine bestimmte Anzahl an Fehlern innerhalb einer bestimmten Zeitspanne oder innerhalb einer bestimmten Anzahl von ersten/zweiten Werten toleriert werden.

Bei einer besonders vorteilhaften Variante des erfindungsgemäßen Verfahrens wird:
- an der ersten Position eine Soll-Abfolge an ersten Werten der zumindest einen physikalischen Eigenschaft erfasst oder eine solche Soll-Abfolge vorgegeben,
- an der zweiten Position eine Ist-Abfolge an zweiten Werten dieser zumindest einen physikalischen Eigenschaft erfasst,
- die Ist-Abfolge mit der Soll-Abfolge verglichen und
- eine Fehlerbehandlung eingeleitet, wenn die ermittelte Abweichung eine vorgebbare Schwelle über- oder unterschreitet.

Bei dieser Variante der Erfindung werden nicht einzelne Signaturen untereinander verglichen, sondern Folgen von Werten, beziehungsweise Signalfolge physikalischer Eigenschaften. Beispielsweise können die Signale dreier Farbsensoren, nämlich eines Rot-Sensors, eines Blau-Sensors und eines Grün-Sensors an verschiedenen Positionen erfasst und sodann miteinander verglichen werden. Im gegebenen Beispiel können die an der ersten und zweiten Position erfassten Abfolgen für die Farbe Grün miteinander verglichen werden. Desgleichen werden die Signalfolgen für Rot und Blau miteinander verglichen. Weichen die Abfolgen einer Farbe zu stark voneinander ab, so wird eine Fehlerbehandlung ausgelöst. Die einzelnen Meßwerte können auch in einer Tabelle gespeichert werden. Die Abfolge von Objekten ergibt sich dann beispielsweise anhand der Reihenfolge der gespeicherten Werte. Selbstverständlich ist aber auch die Verwendung indizierter Tabellen möglich.

Eine Signalfolge kann sowohl als Analog- als auch als Digitalsignal verarbeitet werden. Beim Digitalsignal werden die einzelnen Messwerte der physikalischen Eigenschaft eines Objekts als Binärzahl repräsentiert oder aber auch als Bitstrom (ähnlich dem auf einer Conpact-Disc aufgezeichnetem Musiksignal). Die Erfindung folgt an dieser Stelle eher aus der Nachrichtentechnik beziehungsweise Signalverarbeitung bekannten Prinzipien als der klassischen Objektidentifikation, vor allem deswegen, weil das Vergleichen von einzelnen Signalfolgen mehr oder minder entkoppelt von einer Prüfung auf Übereinstimmung zweier Objekt-Signaturen ist.

Prinzipiell liegen auch bei der eingangs erwähnten Plausibilitätsprüfung auf Basis der Optionen a1), b1), a2) und b2) einzelne Werte vor, diese werden aber nicht wie bei der Signalfolge zwangsläufig sequentiell verarbeitet. Möglich sind hier auch einzelne, insbesondere zufällig ausgewählte Stichproben, um so den Rechenaufwand für die Plausibilitätsprüfung gering zu halten. Selbstverständlich können die Optionen a1), b1), a2) und b2) aber auch für die sequentielle Prüfung der Werte im Rahmen einer Signalfolge herangezogen werden. Der dort genannte Algorithmus wird dann einfach auf einander folgende Werte angewandt.

Werden die von einem Sensor erfassten Werte auf bloß zwei Werte diskriminiert, dann resultiert eine einfache Impulsfolge, welche zwischen den Werten 0 und 1 wechselt. Beispielsweise kann 0 bei einem Grün-Sensor "Objekt enthält keinen Grünanteil" und 1 "Objekt enthält Grünanteil" bedeuten, aber auch eine umgekehrte Logik ist denkbar. Selbstverständlich ist eine beliebig feine Aufteilung der erfassten Werte möglich, soweit die für die Plausibilitätsprüfung zuständige Recheneinheit die anfallende Datenmenge auch verarbeiten kann. Die Erfassungsrate, die Anzahl der Quantisierungsstufen, welche bei der Digitalisierung eines analogen Wertes vorgesehen werden (d.h. die vorzusehende Bit-Breite für den größten möglichen Messwert), die Anzahl der Erfassungspositionen, sowie die Anzahl der erfassten Eigenschaften sind daher stets ins Gleichgewicht mit der verfügbaren Rechenleistung zu bringen. Das heißt die Fördereinrichtung sollte ingenieurmäßig solcherart ausgelegt werden, dass sich eine sinnvolle oder besser eine optimale Nutzung der zur Verfügung stehenden Resourcen ergibt.

An dieser Stelle wird angemerkt, dass sich die Bedeutung des Begriffs "Soll-Abfolge" stets auf die zweite Position bezieht, egal ob sie von einer Steuerung vorgegeben wird oder an der ersten Position erfasst wird. Eine an der ersten Position erfasste Abfolge von Objekten ist zwar im eigentlichen Sinn auch eine "Ist-Abfolge" (da sie ja zum Erfassungszeitpunkt tatsächlich vorhanden ist), stellt aber für die zweite Position eine "Soll-Abfolge", dar (die in der Zukunft vorhanden sein soll). Die an der zweiten Position erfasste Ist-Abfolge kann aber ihrerseits wieder Soll-Abfolge für eine dritte Position werden usw. Das Verfahren kann also rekursiv durchgeführt werden.

Schließlich ist auch eine Variante denkbar, bei der eine Abfolge von Objekten an der ersten Position erfasst wird und dann von einer Steuerung eine gewünsche Soll-Abfolge vorgegeben wird, wenn z.B. die erfasste Abfolge nicht erwünschten Kriterien entspricht. Beispielsweise können so zu geringe Abstände zwischen den Objekten erfasst und durch entsprechende Befehle an die Antriebe korrigiert werden. An der zweiten Position sollte die Ist-Abfolge dann der vorgegebenen Soll-Abfolge entsprechen.

Günstig ist es darüber hinaus, wenn als Fehlerbehandlung das Abgeben eines Alarmsignals und/oder das Einleiten von Maßnahmen zur Angleichung einer Ist-Position der Objekte an deren Soll-Position vorgesehen ist. Dies sind zwei beispielhafte Ausgestaltungen einer Fehlerbehandlung. Einerseits kann ein Alarmsignal abgegeben werden, um einen Fehler anzuzeigen, andererseits können die Ist-Positionen der Objekte durch entsprechende Ansteuerung der Antriebe an deren Soll-Positionen angepasst werden. In letzterem Fall liegt sogar eine "Fehlerbehebung" vor, die prinzipiell auch ohne das Wissen einer Bedienperson der Fördereinrichtung ablaufen kann. An dieser Stelle wird weiterhin angemerkt, dass das Alarmsignal auch implizit dadurch "abgegeben" werden kann, indem ein Gut-Signal ausbleibt. Das heißt, dass für eine Alarmierung nicht notwendigerweise ein Signal aktiv ausgegeben werden muss. Des Weiteren wird darauf hingewiesen, dass sich das Signal sowohl an Personen als auch an eine übergeordnete Steuerung richten kann. Für Personen kommen dabei vorwiegend optische und/oder akustische Signale in Betracht, wohingegen ein Signal an eine übergeordnete Steuerung zumeist ein elektronisches sein wird. Alternativ sind dafür aber beispielsweise auch optische Signale oder Funksignale denkliar.

Besonders vorteilhaft ist es in diesem Zusammenhang, wenn die Ist-Abfolge oder die Soll-Abfolge aufgrund von Routing-Daten der Objekte modifiziert wird, wenn zwischen der ersten Position und der zweiten Position ein Knoten der Fördereinrichtung liegt. Werden die Förderströme an Knoten der Fördereinrichtung aufgeteilt oder zusammengeführt, so sollten auch vorteilhaft die zugehörigen Abfolgen zusammengerührt oder aufgeteilt werden. Wird davon ausgegangen, dass eine Abfolge in einer Objektlücke einen mehr oder minder konstanten und niedrigen Wert (bei negativer Logik hohen Wert) aufweist, insbesondere den Wert Null, dann können die Abfolgen bei einer Zusammenführung der Objektströme durch einfache Summierung gebildet werden. Hierfür stehen beispielsweise aus der Nachrichtentechnik und Signal-verarbeitungstechnik vorteilhaft Standard-Bauelemente beziehungsweise Standard-Algorithmen zur Verfügung, weswegen sich die Realisierung des erfindungsgemäßen Verfahrens relativ einfach gestaltet. Analog dazu kann bei einer Aufteilung des Objektstroms die Signalfolge eines Zweiges beispielsweise dadurch erhalten werden, dass die Signalfolge des anderen Zweiges von der Ursprungs-Signalfolge subtrahiert wird.

Günstig ist es weiterhin, wenn beim Vergleichen der Ist-Abfolge mit der Soll-Abfolge eine auf dem Erfassungsabstand oder der Erfassungszeitspanne basierende Verschiebung unberücksichtigt bleibt. Beim Vergleichen der Soll-Abfolge mit der Ist-Abfolge bleibt eine mutmaßliche Objektverschiebung, welche aus der Distanz zwischen erster und zweiter Position, d.h. dem Erfassungsabstand, resultiert, unberücksichtigt. Entspricht die tatsächliche Ortsveränderung der Objekte der erwarteten, dann werden die Abfolgen an den Stellen untersucht, die demselben Objekt zugeordnet sind, bloß an unterschiedlichen Erfassungspositionen beziehungsweise zu verschiedenen Erfassungszeitpunkten. Diese Variante der Erfindung eignet sich besonders dann, wenn es auf die absolute Position der Objekte ankommt. Diese Variante der Erfindung kann auch als Analogon für die eingangs genannte Prüfung entsprechend den Optionen a2) oder b2) gesehen werden beziehungsweise mit Hilfe des unter den Optionen a2) und/oder b2) genannten Algorithmus durchgeführt werden.

Günstig ist es auch, wenn beim Vergleichen der Ist-Abfolge mit der Soll-Abfolge eine Verschiebung zwischen einem Charakteristikum in der Soll-Abfolge und demselben Charakteristikum in der Ist-Abfolge unberücksichtigt bleibt. Hier wird der Vergleich bei Auftreten desselben Charakteristikums ausgelöst ("getriggert"), das heißt bei im Wesentlichen übereinstimmenden Werten oder Signaturen. Auf diese Weise kann beispielsweise festgestellt werden, ob die Reihenfolge oder Sequenz der Objekte gleich geblieben ist, unabhängig von der tatsächlichen absoluten Position der Objekte. Diese Variante der Erfindung eignet sich besonders dann, wenn es auf die absolute Position der Objekte nicht so sehr ankommt, aber die relative Position zwischen den Objekten beziehungsweise deren Reihenfolge überwacht werden soll. Diese Variante der Erfindung kann somit auch als Analogon für die eingangs genannte Prüfung entsprechend den Optionen a1) oder b1) gesehen werden, beziehungsweise mit Hilfe des unter den Optionen a1) und/oder b1) genannten Algorithmus durchgeführt werden. Besonders vorteilhaft ist es, wenn die Soll-Abfolge und Ist-Abfolge mit Hilfe einer Korrelationsfunktion verglichen werden. Bei dieser Variante werden aus der Nachrichtentechnik beziehungsweise Signalverarbeitungstechnik an sich bekannte Methoden verwendet, um den ordnungsgemäßen Betrieb einer Fördereinrichtung zu überwachen. Mit Hilfe einer an sich bekannten Korrelationsfunktion, kann der Grad der Ähnlichkeit, der Korrelationskoeffizient, zwischen zwei Abfolgen ermittelt werden. Wegen der Verschiebung der Signalfolgen ist hier die Krenzkorrelationsfunktion besonders geeignet. Alternativ kann aber auch die Autokörrelationsfunktion verwendet werden.

Günstig ist es, wenn eine Signatur der Objekte beim Vergleichen der Ist-Abfolge mit der Soll-Abfolge unberücksichtigt bleibt. Auf diese Weise können die Abstände zwischen den Objekten überwacht werden. Beispielsweise kann geprüft werden, ob ein an der ersten Position ermittelter Abstand bis zur zweiten Position gleich geblieben ist. Alternativ kann auch geprüft werden, ob ein von einer Steuerung vorgegebener Abstand tatsächlich vorliegt.

Günstig ist es, wenn der Abstand zwischen den Objekten beim Vergleichen der Ist-Abfolge mit der Soll-Abfolge unberücksichtigt bleibt. Auf diese Weise können die Objekt-Signaturen als solche überwacht werden. Entspricht eine Signatur eines Objektes an der zweiten Position nicht der erwarteten Signatur, so ist dies ein Indiz dafür, dass es sich nicht um ein- und dasselbe Objekt handelt und der Fördereinrichtung ein Objekt entweder (unerlaubterweise) entnommen oder hinzugefügt wurde, unabhängig davon, ob sich der Abstand zwischen den Objekten geändert hat.

Günstig ist es weiterhin, wenn eine Soll-Abfolge derart vorgegeben wird, dass deren Wellenlänge beziehungsweise Periodendauer größer ist als ein vorgebbarer Wert. Bei dieser Variante werden die Objekte auf der Fördereinrichtung so verteilt, dass sich eine Signalfolge mit vorgebbarer Wellenlänge (bei Signalfolgen auf Wegbasis) beziehungsweise Periodendauer (bei Signalfolgen auf Zeitbasis) ergibt. Insbesondere bei gleichartigen Objekten ergibt sich ohne weitere Maßnahmen schnell eine Signalfolge, welche periodisch verläuft. Das Ergebnis der Plausibilitätsprüfung ist dabei umso sicherer, je größer die Wellenlänge/Periodendauer der Impulsfolge ist. Umgekehrt führt eine kurze Wellenlänge/Periodendauer dazu, dass das Ergebnis unsicherer wird, da nicht ohne weiteres festgestellt werden kann, welche sich periodisch wiederholenden Abschnitte der Signalfolge konkret miteinander verglichen werden.

Folglich ist es wünschenswert, eine bestimmte Mindest-Periodendauer der Signalfolge vorgegeben zu können, um so auch eine bestimmte Sicherheit bei der Ausführung der Plausibilitätsprüfung zu gewährleisten.

Zwar sind es gleichartige Objekte, die sehr schnell zu einer kurzen Periodendauer/Wellenlänge führen, jedoch kann gerade bei diesen Objekten unter Umständen eine Überprüfung auf Objekt-Identität unterbleiben und stattdessen eine Überprüfung auf Objekt-Ähnlichkeit erfolgen. In diesem Fall ist es letztlich egal, welche der sich periodisch wiederholenden Abschnitte der Signalfolge konkret miteinander verglichen werden. Eine Fehlerbehandlung wird in diesem Fall dann ausgelöst, wenn zumindest einer der Abschnitte anders ist als die anderen beziehungsweise anders als erwartet.

Günstig ist es, wenn zwischen den Objekten unterschiedliche Abstände vorgesehen werden. Auf diese Weise kann die Wellenlänge/Periodendauer der Signalfolge vergrößert werden.

Vorteilhaft ist es weiterhin, wenn zwischen Objekten gleicher Signatur unterschiedliche Abstände vorgesehen werden. Insbesondere wenn auf der Fördereinrichtung gleichartige Objekte transportiert werden, führt das Vorsehen gleicher Abstände zu einer sehr kleinen Wellenlänge/Periodendauer der erhaltenen Signalfolge. Das Ergebnis der Plausibilitätsprüfung ist daher mit sehr großen Unsicherheiten behaftet, da die Zuordnung der Objekte zu den einzelnen Abschnitten der Signalfolge kaum oder nicht mehr möglich ist. Wie erwähnt kann aber unter bestimmten Umständen auch eine Überprüfung auf Objekt-Ähnlichkeit erfolgen, bei der es egal ist, welche der sich periodisch wiederholenden Abschnitte der Signalfolge konkret miteinander verglichen werden.

Besonders vorteilhaft ist es auch, wenn zwischen Objekten unterschiedlicher Signatur gleiche Abstände vorgesehen werden. Bei Objekten unterschiedlicher Signatur ist in der Regel ohnehin eine vergleichsweise große Wellenlänge/Periodendauer der Signalfolge gegeben, sodass gleiche Abstände zwischen den Objekten vorgesehen werden können, ohne die erwähnten Nachteile im Bezug auf die Wellenlänge/Periodendauer in Kauf nehmen zu müssen. Auf diese Weise kann der Durchsatz der Fördereinrichtung maximiert werden, da wegen zu kurzer Wellenlänge/Periodendauer ja keine größeren Abstände vorgesehen werden müssen, als dies aus Sicherheitsgründen erforderlich wäre.

In einer vorteilhaften Variante der Erfindung wird geprüft, ob eine in der Ist-Abfolge enthaltene Signatur der Summensignatur zweier oder mehrere aufeinander folgender Objekte in der Soll-Abfolge entspricht wenn eine Signatur in der Ist-Abfolge länger ausfällt als die in der Soll-Abfolge erwartete Signatur. Wenn dies zutrifft, wird ein Signal für fehlenden Abstand abgegeben. Wenn zwei Objekte unerwünschter Weise einander berühren, d.h. zwischen ihnen kein Sicherheitsabstand mehr vorliegt, so macht sich dies in der Signalfolge dahingehend bemerkbar, dass deren Signaturen unmittelbar aufeinander folgen. Entspricht eine an der zweiten Position ermittelte Signatur also zwei an der ersten Position ermittelten Einzelsignaturen, so kann davon ausgegangen werden, dass der Abstand zwischen diesen Objekten nicht mehr vorhanden ist.

In einer weiteren vorteilhaften Variante der Erfindung wird geprüft, ob ein in der Ist-Abfolge enthaltener Abstand von einem ersten Objekt zu einem benachbarten zweiten Objekt einem Abstand zwischen dem ersten Objekt und dem in der Soll-Abfolge nicht benachbarten zweiten Objekt entspricht, wenn ein Objektabstand in der Ist-Abfolge länger ausfällt als der in der Soll-Abfolge erwartete Objektabstand. Wenn dies zutrifft, wird ein Signal für ein fehlendes drittes Objekt abgegeben. Wenn ein Objekt (unerlaubterweise) von der Fördereinrichtung genommen wurde oder von dieser heruntergefallen ist, so macht sich dies in der Impulsfolge dahingehend bemerkbar, dass an der zweiten Position eine längere Pause als erwartet auftritt (bei positiver Logik). Entspricht deren Länge zumindest im Wesentlichen dem Abstand zweier in der Soll-Abfolge an sich nicht benachbarter Einzelobjekte, so kann davon ausgegangen werden, dass zwischen diesen Objekten zumindest ein Objekt fehlt.

In noch einer weiteren vorteilhaften Variante der Erfindung wird geprüft, ob ein in der Ist-Abfolge enthaltener Abstand von einem ersten Objekt zu einem nicht benachbarten zweiten Objekt einem Abstand zwischen dem ersten Objekt und dem in der Soll-Abfolge benachbarten zweiten Objekt entspricht wenn ein Objektabstand in der Ist-Abfolge kürzer ausfällt als der in der Soll-Abfolge erwartete Objektabstand. Wenn dies zutrifft, wird ein Signal für ein hinzugefügtes drittes Objekt abgegeben. Wenn ein Objekt (unerlaubterweise) hinzugefügt wurde oder auf die Fördereinrichtung hinaufgefallen ist, so macht sich dies in der Impulsfolge dahingehend bemerkbar, dass an der zweiten Position eine kürzere Pause als erwartet auftritt (bei positiver Logik). Entspricht der Abstand zweier in der Soll-Abfolge benachbarter Einzelobjekte zumindest im Wesentlichen dem Abstand zweier in der Ist-Abfolge nicht benachbarter Einzelobjekte, so kann davon ausgegangen werden, dass zwischen diesen Objekten zumindest ein Objekt hinzugefügt wurde.

In einer weiteren vorteilhaften Variante der Erfindung wird schließlich geprüft, ob die Positionen zweier in der Soll-Abfolge enthaltener Signaturen in der Ist-Abfolge vertauscht sind, wenn eine Signatur in der Ist-Abfolge anders ausfällt als die in der Soll-Abfolge erwartete Signatur. Wenn dies zutrifft wird ein Signal für vertauschte Objekte abgegeben. Auf diese Weise kann geprüft werden, ob zwei Objekte unerlaubterweise vertauscht werden, etwa wenn das Personal der Fördereinrichtung zwei Objekte entnimmt, um diese in Augenschein zu nehmen, und dann aber irrtümlich vertauscht wieder auf das Förderband legt.

Vorteilhaft ist es zudem, wenn die Werte kodiert werden und die Plansibilitätsprüfung auf Basis der kodierten oder wieder dekodierten Werte erfolgt. Bei dieser Variante der Erfindung werden bestimmten Mustern von Werten bestimmte Symbole zugeordnet. Beispielsweise kann eine bestimmte Abfolge von Bits einem Symbol zugeordnet werden. Denkbar ist aber auch, dass ganze (vorteilhaft häufig vorkommende) Signaturen durch ein Symbol repräsentiert werden. Auf diese Weise kann die Menge der zu übertragenden Daten drastisch reduziert werden, sodass ein sorgsamer Umgang mit den limitierten Ressourcen in einer Fördereinrichtung gewährleistet ist. In einer Variante wird die Plausibilitätsprüfung gleich anhand der komprimierten Werte, d.h. anhand der Symbole durchgeführt. Anstatt Werte beziehungsweise Signalfolgen auf Bit-Ebene zu vergleichen, werden hier Symbole beziehungsweise Abfolgen von Symbolen miteinander verglichen. In einer weiteren Variante werden die kodierten Werte nach deren Übertragung (beispielsweise zu einer zentralen Recheneinheit) wieder dekodiert und der Plausibilitätsprüfung in ihrer ursprünglichen Form zugrundegelegt. Für die Datenkompression kommen prinzipiell natürlich alle gängigen Algorithmen in Frage. Beispielsweise können die digitalen Daten für die Zwecke der Datenkompression als Audiodaten aufgefasst werden und mit Hilfe des an sich bekannten MP3-Algorithmus komprimiert werden. Der MP3-Algorithmus ist verlustbehaftet, es ist also prinzipiell nicht möglich, die ursprünglichen Daten fehlerfrei zu rekonstruieren. Daher ist bei der Verwendung einer verlustbehafteten Kompression zu überlegen, welches Ausmaß an Fehlern noch tolerierbar ist. Denkbar ist natürlich auch, verlustlose Algorithmen zu verwenden, die an sich eine fehlerfreie Rekonstruktion zulassen, dafür in der Regel aber nur geringere Kompressionsraten erlauben.

Vorteilhaft ist es auch, wenn ein Sensor mehrere Bereiche erfasst. Für die Überprüfung mehrerer Erfassungsbereiche kann auch ein einziger Sensor vorgesehen werden, der in der Lage ist, beide Erfassungsbereiche gleichzeitig abzutasten. Alternativ können die Erfassungsbereiche auch sequentiell abgetastet werden. Wenn dies hinreichend schnell gegenüber der Fördergeschwindigkeit erfolgt, so wirkt sich die sequentielle Abtastung nur vernachlässigbar gering auf das erfindungsgemäße Verfahren beziehungsweise die erfindungsgemäße Fördereinrichtung aus.

Günstig ist es zudem, wenn zur Erfassung je eines Bereichs je ein Sensor vorgesehen ist. Auf diese Weise kann die Fördereinrichtung insofern fehlertolerant gestaltet werden, als der Ausfall eines einzelnen Sensors in der Regel nicht zum Ausfall des gesamten Systems führt.

An dieser Stelle wird angemerkt, dass sich die zur erfindungsgemäßen Fördereinrichtung genannten Varianten und daraus resultierenden Vorteile gleichermaßen auf das erfindungsgemäße Verfahren beziehen und umgekehrt.

Die obigen Ausgestaltungen und Weiterbildungen der Erfindung können auf beliebige Art und Weise kombiniert werden.

Zum besseren Verständnis der Erfindung wird diese anhand der nachfolgenden Figuren näher erläutert.

Es zeigen jeweils in stark schematisch vereinfachter Darstellung:
- Fig. 1: einen Rollenförderer in perspektivischer Ansicht nach dem Stand der Technik;
- Fig. 2: einen Schnitt durch eine schematisch dargestellte Motorrolle eines Rollenförderers nach dem Stand der Technik;
- Fig. 3: eine schematische Darstellung einer beispielhaften erfindungsgemäßen Fördereinrichtung;
- Fig.4: ein erstes Segment in Pseudo-Code, welches beispielhaft einen Teil des erfindungsgemäßen Verfahrens abbildet;
- Fig.5: ein zweites Segment in Pseudo-Code, welches beispielhaft einen anderen Teil des erfindungsgemäßen Verfahrens abbildet;
- Fig. 6: eine beispielhafte Abfolge von Objekten in Form einer Signalfolge;
- Fig. 7.: einen Ausschnitt der von einem Sensor erfassten Bilddaten;
- Fig. 8a: den Vergleich zweier periodischer Signalfolgen;
- Fig. 8b: wie Fig. 8b nur mit unerwünschterweise verschobenen Signalfolgen;
- Fig. 9a: den Vergleich zweier nicht periodischer Signalfolgen;
- Fig. 9b: wie Fig. 9b nur mit unerwünschterweise verschobenen Signalfolgen;
- Fig. 10: eine Methode, in einer Signalfolge eine vorgegebene Wellenlänge herzustellen;
- Fig. 11: eine Signalfolge unterschiedlich langer aber gleich beabstandeter Objekte;
- Fig. 12: einen Ablauf, bei dem zwei Objekte einander berühren;
- Fig. 13: einen Ablauf, bei dem ein Objekt entnommen wird;
- Fig. 14: einen Ablauf, bei dem ein Objekt hinzugefügt wird;
- Fig. 15: einen Ablauf, bei dem zwei Objekte vertauscht werden;
- Fig. 16: eine beispielhafte Abfolge von Objekten in Form von numerischen Werten in einer Tabelle;
- Fig. 17: einen beispielhaften Knoten mit mehreren Erfassungspositionen und
- Fig. 18: einen Sensor, welche zwei Erfassungsbereiche abtastet.

Einführend wird festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Die Ausführungsbeispiele zeigen mögliche Ausführungsvarianten einer erfindungsgemäßen Fördereinrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

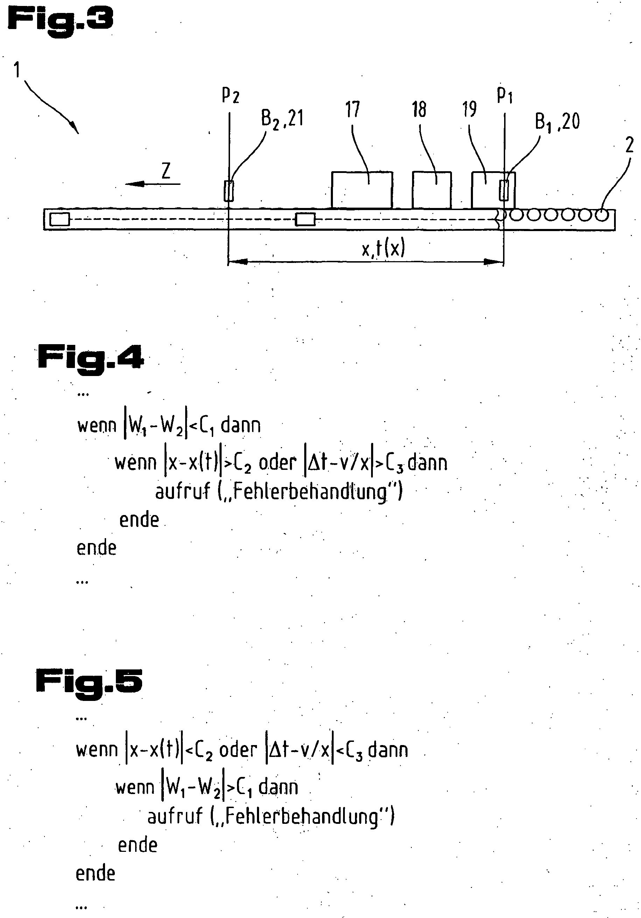

Fig. 3 zeigt nun eine beispielhafte Fördereinrichtung 1, hier in Form eines Rollenförderers, mit mehreren in einer Förderrichtung z örtlich hintereinander liegenden und individuell austeuerbaren Antrieben 2, welche im gezeigten Beispiel drei Objekte 17..19 transportieren. Ein Antrieb 2 kann dabei aus einer Motorrolle 5 gebildet werden oder, wie in Fig. 1 dargestellt, beispielsweise auch aus einer Motorrolle 5 und einer oder mehreren mit einem Riemen 6 angetrieben Hilfsrolle(n) 7. Denkbar ist natürlich auch, dass ein Antrieb aus einem (mehr oder minder kurzen) Förderband besteht. Beispielsweise kann über die Motorrolle 5 und die Hilfsrolle 7 in Fig. 1 ein Förderband gespannt werden, wenn dies aufgrund der Art der zu fördernden Objekten 17..19 vorteilhaft ist. Selbstverständlich kann die Länge des Förderbandes auch größer gewählt werden. Gleichermaßen kann natürlich auch eine Förderkette vorgesehen werden.

Im vorderen Bereich der Fördereinrichtung 1 ist bei einer ersten Position P₁ ein erster Erfassungsbereich B₁ und bei der zweiten Position P₂ ein zweiter Erfassungsbereich B₂ angeordnet. Im vorliegenden Beispiel wird jeder Erfassungsbereich von einem eigenen Sensor überwacht. Dem ersten Erfassungsbereich B₁ ist daher ein erster Sensor 20, dem zweiten Erfassüngsbereich B₂ ein zweiter Sensor 21 zugeordnet. Der Einfachheit halber wird für die folgenden Betrachtungen davon ausgegangen, dass es sich bei den Sensoren 20 und 21 um zwei Farbsensoren handelt, welche jeweils drei Farbwerte, einen für Rot, einen für Grün und einen für Blau liefern. Dies ist jedoch keinesfalls zwingend, wie später noch erläutert werden wird. Im Folgenden wird weiterhin davon ausgegangen, dass die Farbe als Binärzahl mit 3 Byte Länge erfasst wird, so wie dies im RGB-Model (Rot-Grün-Blau-Modell) üblich ist. Die Farbe kann aber auch als Menge, beziehungsweise Vektor dreier Binärzahlen mit jeweils 1 Byte Länge aufgefasst werden. Die Signatur des Objektes 17..19 bleibt dabei gleich, es ändert sich lediglich deren Darstellungsweise.

In der Fig. 3 sind auch nicht näher bezeichnete lokale Steuereinheiten entlang der Fördereinrichtung 1 angeordnet, welche Kommandos einer übergeordneten Steuerung empfangen und diese an die Antriebe 2 weiterverteilen.

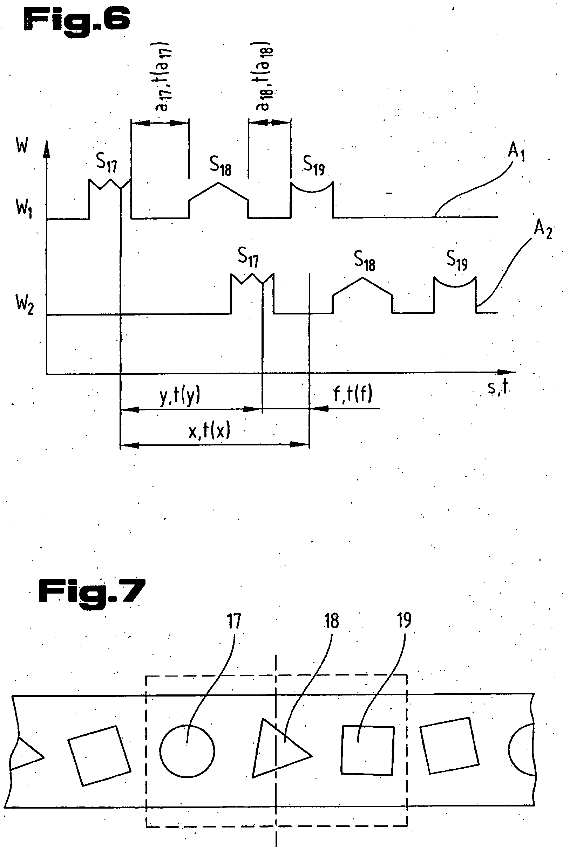

Die Funktion der in der Fig. 3 dargestellten Anordnung ist wie folgt (siehe hierzu ergänzend auch Fig. 6):
Am Anfang der Fördereinrichtung 1 werden zu verschiedenen Zeitpunkten verschiedene Objekte 17..19 abgelegt, welche in Folge von den Antrieben 2 weiterbefördert werden. Bei Passieren der ersten Position P₁ beziehungsweise des ersten Erfassungsbereichs B₁ wird die Signatur der Objekte 17..19 in Form von Farbwerten W₁ erfasst. Der erste Erfassungsbereich B₁ ist dabei so angeordnet, dass die Objekte 17..19 vor diesem auf der Fördereinrichtung 1 abgelegt werden können. Der Erfassungsbereich B₁ kann aber auch ganz zu Beginn der Förderernrichtung 1 angeordnet sein, beispielsweise wenn von der Fördereinrichtung 1 noch eine andere (nicht dargestellte) Fördereinrichtung 1 vorgesehen ist, und daher kein Platz für das Ablegen von Objekten 17..19 vorgesehen werden braucht.

In einer Variante der Erfindung wird die Erfassung des Farbwertes W₁ durch den Sensor 20 durch eine zusätzlich im ersten Erfassungsbereich B₁ angeordneten Lichtschranke, welche das Vorhandensein eines Objektes 17..19 anzeigt, ausgelöst ("getriggert"). Denkbar ist auch, dass in einem Initialisierungsschritt die vom Sensor 20 erfasste Farbe ohne vorhandenes Objekt 17..19, das heißt in einer Objektlücke, ermittelt wird. Wechselt die Farbe nun von diesem auf einen anderen Wert, so ist dies ein relativ verlässliches Zeichen, dass ein Objekt 17..19 den Erfassungsbereich B₁ erreicht hat. Auch dieses Verhalten kann dazu genutzt werden, eine Erfassung eines Farbwertes W₁ eines Objektes 17..19 auszulösen. Nachteilig an dieser Methode ist allerdings, dass Objekte 17..19 die eine ähnliche Farbe aufweisen wie der Erfassungsbereich B₁ während des Initialisierungsschritts, unter Umständen nicht erkannt werden. Aus Sicherheitsgründen ist es daher ratsam, für das Auslösten eines ersten Wertes W₁ einer physikalischen Eigenschaft eines Objektes 17..19 einen (zusätzlichen) Sensor vorzusehen, der das Vorhandensein eines Objektes 17..19 sicher erkennt.

Mit Hilfe des Sensors 20 wird nun die Farbe des Objektes 17..19 an der ersten Position P₁ zu einem ersten Zeitpunkt t₁ ermittelt. Dabei können mehrere Einzelwerte W₁ oder auch der Farbmittelwert für die Signatur S₁₇, S₁₈, S₁₉ der Objekte 17..19 herangezogen werden. Eine Änderung des Farbwertes W₁ auf den Initialwert zeigt dabei das Ende des vorbeifahrenden Objektes 17..19 an. Das Beenden des Erfassungsvorgangs des ersten Wertes W₁ oder der ersten Werte W₁ der Farbe kann selbstverständlich auch mit Hilfe der erwähnten zusätzlichen Lichtschranke gesteuert werden.

An der zweiten Position P₂, welche in der Förderrichtung z gesehen in einem Erfassungsabstand x hinter der ersten Position P₁ angeordnet ist, wird zu einem zweiten Zeitpunkt t₂ im Prinzip derselbe Vorgang nochmals durchgeführt, bloß im Erfassungsabstand x und nach der Erfassungszeitspanne t(x)₄ An der zweiten Position P₂ werden somit zweite Werte W₂ der Farbe, d.h. ein zweite Werte W₂ für die Signatur S₁₇, S₁₈, S₁₉ der Objekte 17...19 erfasst.

In einer alternativen Ausführungsform wird die erste Signatur S₁₇, S₁₈, S₁₉ nicht erfasst sondern vorgegeben. Beispielsweise sind die entsprechenden Daten aus einer anderen Quelle bekannt oder wurden während einer früheren Verarbeitung gleichartiger Objekte 17..19 gespeichert.

Beispielsweise können die Objekteingenschaften im Rahmen einer Wareneingangskontrolle von einer dafür vorgesehenen Einrichtung erfasst und in einer Datenbank gespeichert werden, also zu einem Zeitpunkt, an dem sich die Objekte 17..19 noch nicht auf der Fördereinrichtung 1 befinden. Diese Prüfung kann beim erstmaligen Fördern eines bestimmten Objektes 17..19, beziehungsweise stichprobenartig auch später wiederholt erfolgen. Dabei können Abweichungen der Signatur S₁₇, S₁₈, S₁₉ erfasst werden. Beispielsweise könnte die Verpackung eines Artikels tendenziell größer sein als ursprünglich, weil der Hersteller des Artikels nun einen dickeren Karton für dessen Verpackung verwendet. Diese Änderungen können auch saisonal bedingt sein. Beispielsweise weisen Getränkeverpackungen zur Weihnachtszeit häufig spezielle Aufdrucke auf. Damit kann sich die Signatur für ein und denselben Artikel im Laufe der Zeit ändern. Durch stetige Erfassung der Objekteigenschaften können solche Änderungen erkannt, beziehungsweise nachvollzogen werden.

In einem weiteren Schritt wird nun eine Plausibilitätsprüfung durchgeführt, und zwar im Hinblick auf die Übereinstimmung des ersten Wertes W₁ mit dem zweiten Wert W₂ sowie der zwischen der Erfassung des ersten Wertes W₁ und des zweiten Wertes W₂ mutmaßlich erfolgten Ortsveränderung der Objekte 17..19 basierend auf a) dem über die Antriebe 2, 2a..2c vorgegebenen Soll-Weg und/oder b) der über die Antriebe 2, 2a..2c vorgegebenen Soll-Geschwindigkeit in Verbindung mit der Erfassungszeitspanne t(x).

Wie erwähnt geben die Antriebe 2, 2a..2c, respektive die übergeordnete Steuerung einen Soll-Weg beziehungsweise eine Soll-Geschwindigkeit der Objekte 17..19 vor. Es ist nun zwar wahrscheinlich aber nicht sicher, dass die Objekte 17..19 in der Erfassungszeitspanne t(x) tatsächlich den Erfassungsabstand x zurückgelegt haben. Stimmen erster Wert W₁ und zweiter Wert W₂ überein und ist auch die mutmaßlich erfolgte Ortsveränderung der Objekte 17..19 plausibel, so kann davon ausgegangen werden, dass die Fördereinrichtung 1 ordnungsgemäß in Betrieb ist. Ist der Ausgang der Plausibilitätsprüfung negativ, so liegt aller Wahrscheinlichkeit eine Störung auf der Fördereinrichtung 1 vor. Im vorliegenden Fall liegt zwischen den Objekten 17..19 die tatsächlich vorhandene Verschiebung y, t(y), wohingegen eine Verschiebung x, t(x) erwartet wurde. Es resultiert daher der Fehler f, t(f).

In einer Variante wird eine Fehlerbehandlung eingeleitet, wird also ein Alarmsignal abgegeben und/oder es werden Maßnahmen zur Angleichung einer Ist-Position der Objekte 17..19 an deren Soll-Position eingeleitet, d.h. die Antriebe 2 werden entsprechend angesteuert, um eine gewünschte Abfolge wieder herzustellen, wenn:
a1) der durch die Antriebe 2, 2a..2c vorgegebene, in der Erfassungszeitspanne t(x) zwischen der Erfassung zweier im Wesentlichen gleicher Werte W₁, W₂ zurückgelegte Soll-Weg der Objekte 17..19 nicht im Wesentlichen dem Erfassungsabstand x entspricht und/oder
a2) zwei Werte W₁ W₂ nicht im Wesentlichen gleich sind, zwischen deren Erfassung eine Erfassungszeitspanne t(x) liegt, in der die Objekte 17..19 einen durch die Antriebe 2, 2a..2c vorgegebenen Soll-Weg zurückgelegt haben sollten, der im Wesentlichen dem Erfassungsabstand x entspricht und/oder
b1) die Erfassungszeitspanne t(x) zwischen der Erfassung zweier im Wesentlichen gleicher Werte W₁ W₂ nicht im wesentlichen der Zeitspanne entspricht, die durch die Soll-Geschwindigkeit der Antriebe 2, 2a..2c dividiert durch den Erfassungsabstand x gegeben ist, und/oder
b2) zwei Werte W₁, W₂ nicht im Wesentlichen gleich sind, zwischen deren Erfassung eine Erfassungszeitspanne t(x) liegt, die im Wesentlichen der Soll-Geschwindigkeit der Antriebe 2, 2a..2c dividiert durch den Erfassungsabstand x entspricht.

gegebenenfalls kann das Auftreten einer Abweichung auch auf einem Bedienpult der Förderanlage 1 angezeigt werden. Denkbar ist auch, dass bei Auftreten einer Abweichung von einem "Normalbetrieb" in einen "Störbetrieb" umgeschaltet wird, in dem zusätzliche Vorkehrungen getroffen werden. Beispielsweise kann die Fördergeschwindigkeit auf der gesamten Förderanlage 1 oder auf nur einem Teil derselben reduziert werden. Werden keine oder tolerierbare Abweichungen detektiert, dann kann wieder in den Normalbetrieb umgeschaltet werden.

Fig. 4 zeigt nun ein erstes Segment in Pseudo-Code, welches die Abfragen nach a1) und b1) abbildet, wobei angenommen wird, dass aus einer Vielzahl von Daten (hier Werte W₁, W₂ mit zugeordneter Orts- und/oder Zeitinformation) stichprobenartig repräsentative Daten ausgewählt werden. In einer äußeren Abfrage wird festgestellt, ob die Abweichung zwischen den beiden Werten W₁ und W₂ innerhalb eines vorgebbaren Bereichs C₁ liegt, also ob die beiden Werte W₁ und W₂ im Wesentlichen übereinstimmen. In einer inneren Abfrage wird überprüft, ob die den Werten W₁, W₂ zugeordnete Orts- beziehungsweise Zeitinformation mit der mutmaßlichen Ortsveränderung der Objekte 17..19 korreliert. Konkret wird geprüft ob die Differenz zwischen der den beiden Werten W₁, W₂ zugeordneten Ortsinformation dem Erfassungsabstand x im Wesentlichen nicht entspricht, d.h. die Abweichung zwischen den beiden Entfernungen größer ist als eine vorgebbare Abweichung C₂. In einer weiteren Abfrage wird geprüft ob die Differenz zwischen der den beiden Werten W₁, W₂ zugeordneten Zeitinformation der Erfassungszeitspanne t(x) im Wesentlichen nicht entspricht, d.h. die Abweichung zwischen den beiden Zeitspannen größer ist als eine vorgebbare Abweichung C₃. Trifft eine der beiden Bedingungen zu, so wird eine Fehlerbehandlung ausgelöst.

Fig. 5 zeigt ein zweites Segment in Pseudo-Code, welches die Abfragen nach a2) und b2) abbildet, wobei wiederum angenommen wird, dass aus einer Vielzahl von Daten (hier Werte W₁, W₂ mit zugeordneter Orts- und/oder Zeitinformation)stichprobenartig repräsentative Daten ausgewählt werden. In einer äußeren Abfrage wird überprüft, ob die den Werten W₁, W₂ zugeordnete Orts- beziehungsweise Zeitinformation mit der mutmaßlichen Ortsveränderung der Objekte 17..19 korreliert. Konkret wird wiederum geprüft ob die Differenz zwischen der den beiden Weiten W₁, W₂ zugeordneten Ortsinformation im Wesentlichen dem Erfassungsabstand x entspricht, d.h. die Abweichung zwischen den beiden Entfernungen kleiner ist als eine vorgebbare Abweichung C₂. In einer weiteren Abfrage wird geprüft ob die Differenz zwischen der den beiden Werten W₁, W₂ zugeordneten Zeitinformation im Wesentlichen der Erfassungszeitspanne t(x) entspricht, d.h. die Abweichung zwischen den beiden Zeitspannen kleiner ist als eine vorgebbare Abweichung C₃. In einer inneren Abfrage wird festgestellt, ob die Abweichung zwischen den beiden Werten W₁ und W₂ außerhalb eines vorgebbaren Bereichs C₂ liegt, also ob die beiden Werte W₁ und W₂ im Wesentlichen nicht übereinstimmen. Trifft dies zu, so wird wiederum eine Fehlerbehandlung ausgelöst.

Obige Code-Segmente sollen natürlich nur illustrieren wie die Plausibilitätsprüfung prinzipiell durchgeführt werden kann. Selbstverständlich sind hier auch andere Prüfungsmethoden denkbar. Der Fachmann wird hier ausgehend von der präsentierten Lehre ohne große Mühe gleichwertige Alternativen auffinden können.

Schließlich wird angemerkt, dass das Alarmsignal im Rahmen einer Fehlerbehandlung auch implizit dadurch "abgegeben" werden kann, indem ein Gut-Signal ausbleibt. Das heißt, dass für eine Alarmierung nicht notwendigerweise ein Signal aktiv ausgegeben werden muss. Des Weiteren wird darauf hingewiesen, dass sich das Signal sowohl an Personen als auch an eine übergeordnete Steuerung richten kann. Für Personen kommen dabei vorwiegend optische und/oder akustische Signale in Betracht, wohingegen ein Signal an eine übergeordnete Steuerung zumeist ein elektronisches sein wird. Alternativ sind dafür aber beispielsweise auch optische Signale oder Funksignale denkbar.

Anhand von Fig. 6 wird nun eine weitere Variante eines Verfahrens zum Betrieb einer Fördereinrichtung 1 vorgestellt. Dabei wird an der ersten Position P₁ eine Soll-Abfolge A₁ an ersten Werten W₁ der zumindest einen physikalischen Eigenschaft eines Objekts 17..19 erfasst, oder es wird eine solche Soll-Abfolge A₁ vorgegeben. In der Fig. 6 bilden die ersten Werte W₁ die Signatur S₁₇ für das Objekt 17, die Signatur S₁₈ für das Objekt 18 und die Signatur S₁₉ für das Objekt 19. Beispielhaft wird nun angenommen, dass die Soll-Abfolge A₁ einfach das Ausgangssignal des Rot-Kanals des eingangs erwähnten Farbsensors darstellt. Exemplarisch weist das Objekt 17 eine kronenartige Signatur S₁₇, das Objekt 18 eine dachförmige Signatur S₁₈ und das Objekt 19 eine dellenartige Signatur S₁₉ auf. Diese Signaturen S₁₇..S₁₉ sind natürlich rein illustrativ zu sehen. In der Realität kann die Abfolge A₁ selbstverständlich auch ganz anders aussehen. An dieser Stelle wird auch darauf hingewiesen, dass die in der Fig. 6 dargestellten Objektlängen und die Abstände a₁₇ und a₁₈ nicht mit den in der Fig. 3 dargestellten Objektlängen und Objektabständen übereinstimmen. Da die Signalfolge A₁ nicht nur auf Basis des Weges s sondern auch auf Basis der Zeit t aufgenommen werden kann, sind in der Fig. 6 zusätzlich die zugeordneten Zeitabstände t(a₁₇) und t(a₁₈) eingetragen.

An der zweiten Position P₂ wird eine Ist-Abfolge A₂ an zweiten Werten W₂ dieser zumindest einen physikalischen Eigenschaft des Objekts 17..19 erfasst. Wie leicht zu erkennen, ist die Ist-Abfolge A₂ bis auf eine Verschiebung y (Wegbasis) beziehungsweise t(y) (Zeitbasis) identisch mit der Soll-Abfolge A₁.

In einem weiteren Schritt wird die Ist-Abfolge A₂ nun mit der Soll-Abfolge A₁ verglichen. Wenn die ermittelte Abweichung eine vorgebbare Schwelle überschreitet, wird eine Fehlerbehandlung eingeleitet, z.B. wird ein Alarmsignal abgegeben und/oder es werden Maßnahmen zur Angleichung der Ist-Abfolge A₂ an die Soll-Abfolge A₁ eingeleitet. Prinzipiell stehen für die Verarbeitung der Signalfolgen A₁ und A₂ mehrere Wege offen wie im Folgenden erläutert wird.

Beispielsweise kann eine Verschiebung y, t(y) zwischen einem Charakteristikum in der Soll-Abfolge A₂ und demselben Charakteristikum in der Ist-Abfolge A₁ unberücksichtigt bleiben. Im gezeigten Beispiel ist das Charakteristikum die zweite untere Zacke der kronenförmigen Signatur S₁₇ des Objekts 17, d.h. der Vergleich wird auf dieses Merkmal "getriggert". Selbstverständlich kann auch jedes andere Charakteristikum dazu herangezogen werden, beispielsweise steigende oder fallende Flanken, das Auftreten eines Impulses mit bestimmter Breite oder das Auftreten einer Impulspause mit bestimmter Breite.

Bei einer anderen Art der Verarbeitung bleibt eine mutmaßliche Ortsveränderung x, beziehungsweise die dieser Ortsveränderung entsprechende Zeit t(x) der Objekte 17..19 uriberücksichtigt. Dabei stellt sich heraus, dass die tatsächliche absolute Position der Objekte 17..19 nicht der erwarteten Position entspricht. Die Objekte 17..19 sind um den Fehler f beziehungsweise die Fehlerzeit t(f) (=Verzögerungszeit) nach hinten verschoben. Während die zuvor erwähnte Verarbeitungsweise eher dazu geeignet ist, die Relativposition der Objekte 17..19 zueinander zu überwachen ist diese Variante der Erfindung eher dazu geeignet, die Absolutposition der Objekte 17..19 zu überwachen.

Wie erläutert kann eine Soll-Position eines Objektes 17..19 mit Hilfe einer Soll-Geschwindigkeit der Antriebe 2 und der Zeit, welche seit Passieren des Referenzpunkts, beispielsweise P₁, verstrichen ist, oder mit Hilfe eines von den Antrieben 2 vorgegebenen Soll-Weges, welcher seit Passieren des Referenzpunkts durchquert ist, ermittelt werden. Mit dieser Information und der Länge eines Objektes 17..19 können nun in an sich bekannter Weise diejenigen Antriebe 2 ermittelt werden, welche gerade in Kontakt mit einem Objekt 17..19 stehen und entsprechend angesteuert werden. Um Kollisionen zu vermeiden, werden von einer Steuerung der Fördereinrichtung 1 in diesem Beispiel Soll-Abstände zwischen den Objekten 17..19 vorgesehen, die entsprechend gesteuert oder geregelt werden, am einfachsten dadurch, dass alle Antriebe 2 dieselbe Soll Geschwindigkeit vorgeben. Die Förderung von Objekten 17..19 mit Hilfe individuell ansteuerbarer Antriebe 2 ist prinzipiell bekannt und wird daher hier nicht im Detail erläutert.

Klar ist jedenfalls, dass sich die Ist-Geschwindigkeit beziehungsweise Ist-Position eines Objektes 17..19 nicht zwangsläufig mit der Soll-Geschwindigkeit beziehungsweise der Soll-Position des jeweiligen Objektes 17..19 deckt. Beispielsweise kann ein Antrieb 2 beim Beschleunigen eines Objektes 17..19 durchrutschen und so eine genaue Positionsbestimmung über die Soll-Geschwindigkeit beziehungsweise den Soll-Weg_der Antriebe vereiteln. Desgleichen kann ein Objekt 17..19 beim Abbremsen über einen Antrieb 2 hinweg rutschen oder von nachfolgenden Objekten 17..19 weitergeschoben werden. Schließlich kann ein Objekt 17..19 überhaupt von der Fördereinrichtung 1 entnommen werden oder von dieser herunterfallen, oder es wird ein Objekt 17..19 hinzugefügt. Im praktischen Betrieb einer Förderanlage 1 kann all dies leicht vorkommen. Erfindungsgemäß können solche Abweichungen des Ist-Zustandes vom Soll-Zustand nun erkannt werden.

In einer weiteren vorteilhaften Variante werden die Soll-Abfolge A₁ und Ist-Abfolge A₂ mit Hilfe einer Korrelationsfunktion miteinander verglichen. Dabei werden Methoden, welche an sich aus der Nachrichtentechnik oder aus der Signalverarbeitung bekannt sind, auf die Überwachung eines Betriebszustands der Fördereinrichtung 1 angewandt. Die Korrelation ist allgemein betrachtet ein Maß dafür, wie ähnlich sich die zu untersuchenden Funktionen sind. Die Korrelation der Signalfolgen kann dabei hardware- oder softwaremäßig bestimmt werden, beispielsweise mit dazu geeigneten Signalprozessoren oder mit einem Field Programmable Gate Array (kurz FPGA).

Der Korrelationskoeffizient ist ein dimensionsloses Maß für den Grad des linearen Zusammenhangs zwischen den Signalfolgen. Er kann Werte zwischen 0 und 1 annehmen. Bei einem Wert von 1 besteht ein vollständig positiver linearer Zusammenhang zwischen den Signalfolgen, d.h. die Signalfolgen sind identisch. Wenn der Korrelationskoeffizient den Wert 0 aufweist, hängen die beiden Signalfolgen überhaupt nicht linear voneinander ab, d.h. die Signalfolgen weisen keinerlei Ähnlichkeit auf. Der Korrelationskoeffizient kann somit direkt als Schwellwert für die Abgabe eines Alarmsignals herangezogen werden. Beispielsweise kann vorgesehen werden, dass ein Alarmsignal abgegeben wird, wenn der Korrelationskoeffizient unter 0.95 fällt. Alternativ oder zusätzlich können auch Maßnahmen zur Angleichung der Ist-Abfolge A₂ an die Soll-Abfolge A₁ eingeleitet werden, was auch die Einleitung weiterer Untersuchungen des Grunds für die Abweichung beinhaltet, beispielsweise die Prüfung ob Objekte 17..19 fehlen (siehe auch weiter unten).

In der Signalänalyse wird die Kreuzkorrelationsfunktion zur Beschreibung der Korrelation zweier Signale, hier der Soll-Abfolge A₁ und der Ist-Abfolge A₂, bei unterschiedlichen Zeitverschiebungen zwischen den beiden Signalen eingesetzt. Somit kann der Grad der Übereinstimmung der Soll-Abfolge A₁ mit der Ist-Abfolge A₂ durch Bilden der Kreuzkorrelation ermittelt werden. Weil die Soll-Abfolge A₁ und die Ist-Abfolge A₂ auf derselben Abfolge von Objekten 17..19 basiert, kann die Korrelation auch mit Hilfe der Autokorrelationsfunktion ermittelt werden. Je nachdem, ob der lineare Zusammenhang zwischen zeitgleichen Messwerten zweier verschiedener Merkmale oder derjenige zwischen zeitlich verschiedenen Messwerten eines einzigen Merkmals betrachtet wird, spricht man entweder von der Kreuzkorrelation oder von der Autokorrelation.

Selbstverständlich kann die Signatur S₁₇..S₁₉ eines Objekts 17..19 auch komplexer aufgebaut sein als dies in den bisherigen Beispielen der Fall war. Beispielsweise können als physikalische Eigenschaft eine oder mehrere der Eigenschaften: Länge, Breite, Höhe, Gewicht, Form, Oberflächenbeschaffenheit, Farbe, Farbmuster, Hell/Dunkelmuster, Transmissionsgrad für elektromagnetische Wellen, Reflexionsgrad für elektromagnetische Wellen, elektrische Leitfähigkeit, magnetische Leitfähigkeit, Transmissionsgrad für Schall wellen, Reflexionsgrad für Schallwellen, Elastizität, vom Antrieb 2, 2a..2c abgegebene Kraft oder eine davon abhängige Größe herangezogen werden. Darüber hinaus kann der Grauwert, die Farbe, das Schwanz-Weiß-Abbild, das Grauwert-Abbild und/oder das Farb-Abbild des Objekts 17..19 für die Bestimmung seiner Signatur S₁₇..S₁₉ herangezogen werden, sowohl im sichtbaren als auch im unsichtbaren Wellenlängenbereich.

Zusätzlich zu dem Färbwert W₁, W₂, welcher in den obigen Beispielen verwendet wurde, kann beispielsweise auch das Gewicht des Objekts 17..19, seine Schalldurchlässigkeit (etwa mit Hilfe eines Ultraschallgebers und -empfängers) sowie der Inhalt eines RFID-Tags bestimmt werden. All diese Daten sind charakteristisch für ein Objekt 17..19 und können wesentlich dazu beitragen, ein Objekt 17..19 zweifelsfrei zu identifizieren. Je mehr Daten über ein Objekt 17..19 gesammelt werden, umso eindeutiger wird das Ergebnis bei seiner Identifikation ausfallen, desto aufwändiger wird allerdings auch die Verarbeitung der Daten. Wegen der bereits erwähnten Verknüpfung der Identifikation mit der mutmaßlich erfolgten Ortsveränderung der Objekte 17..19 kann aber mit einer moderaten Datenmenge das Auslangen gefunden werden, ohne wesentliche Einschränkungen hinsichtlich der Sicherheit bei der Detektion eines Fehlers in der Fördereinrichtung 1 hinnehmen zu müssen.

Das obige Beispiel soll selbstverständlich nur illustrieren, wie eine Signatur S₁₇..S₁₉ eines Objekts 17..19 aufgebaut sein kann. Klarerweise können hier beliebige Eigenschaften eines Objekts 17..19 erfasst werden. Welche Eigenschaften eines Objekts 17..19 ermittelt werden können und wie sie erfasst werden ist prinzipiell aus den Gebieten Materialprüfung und Physik bekannt. Daher wird an dieser Stelle nicht im Detail angegeben welche Sensoren dazu verwendet werden können. Als demonstratives Beispiel wird die magnetische Leitfähigkeit eines Objekts 17..19 angeführt, welche z.B. mit Hilfe beidseits der Fördereinrichtung 1 angebrachten, stromdurchflossenen Spulen ermittelt werden kann. Dabei wird gemessen, welchen Einfluss es hat, das heißt welche Rückwirkung das Objekt 17..19 auf die Spulen hat, wenn sich das Objekt 17..19 im Bereich der Spulen befindet.

Denkbar ist auch, dass an der ersten Position P₁ und/oder an der zweiten Position P₂ mehrere Sensoren unmittelbar hintereinander angeordnet sind und alternierend die Werte W₁, W₂ einer Signalfolge A₁, A₂ erfassen. Auf diese Weise kann die Auflösung erhöht werden, ohne dass dazu die Erfassungsfrequenz der einzelnen Sensoren erhöht werden müsste. Werden beispielsweise drei Sensoren vorgesehen so kann die gegenüber einem Sensor verdreifachte Auflösung erreicht werden, indem jeder Sensor nur jeden dritten Wert einer Signalfolge A₁, A₂ erfasst. Diese Technik ist auch unter dem Begriff "Interleaved Sampling" bekannt.

Eine Eigenschaft eines Objekts 17..19, die recht häufig für die Zwecke der Objektidentifikation herangezogen wird, ist dessen Abbild: Beispielsweise kann eine stillstehende Sensor-Zeile (ähnlich der Sensor-Zeile eines Flachbett-Scanners) ein Endlosbild der an ihr vorbeiziehenden Objekte 17..19 erfassen. Insbesondere kann das Bild vorteilhaft in einen Ringspeicher geschrieben werden, sodass stets beispielsweise die letzten 30 Sekunden gespeichert sind. Selbstverständlich kann die Bildverarbeitung auch auf Basis von Einzelbildern erfolgen, insbesondere auf Basis eines Endlosbildes, welches aus Einzelbildern zusammengesetzt wird. Diese Funktion ist in der Fotografie prinzipiell unter der Bezeichnung "Panoramabild" bekannt.

In diesem Zusammenhang ist es auch von Vorteil, wenn das Alarmsignal die Anzeige erster Bilddaten, welche zu einer Auslösung des Alarms geführt haben, sowie die Anzeige zweiter Bilddaten, welche benachbart zu den ersten Bilddaten sind, bewirkt. Bestimmte Betriebsstörungen bedürfen zu deren Behebung des Eingriffs eines Bedienpersonals der Fördereinrichtung 1. Für dieses ist aber normalerweise nicht ohne weiteres erkennbar, wo genau der Fehler aufgetreten ist, wie der Ist-Zustand der Fördereinrichtung 1 ist und wie der Soll-Zustand der Fördereinrichtung 1 sein sollte. Aus diesem Grund ist es vorteilhaft, wenn die "Umgebung" der Position, an der ein Fehler detektiert wurde, zu visualisieren. Auf diese Weise wird für den Maschinenführer rasch erkennbar, wo der Fehler aufgetreten ist und welcher Ist-Zustand der Fördereinrichtung 1 vorliegt. In einer besonders vorteilhaften Variante der Erfindung wird dem Ist-Zustand auch der Soll-Zustand gegenübergestellt. Beispielsweise können hierzu an der zweiten Position erfasste Videodaten in einem Zeitraum von ± 2 Sekunden nach dem Auftreten eines Fehlers angezeigt werden. Dies wird unter anderem deshalb möglich, weil die Fördereinrichtung 1 bei Aufdecken eines Fehlers nicht zwangsläufig angehalten wird beziehungsweise nicht sofort angehalten werden kann. Somit stehen in der Regel Bilddaten beidseits des entdeckten Fehlers zur Verfügung.

Fig. 7. zeigt dazu einen Ausschnitt der von einem Sensor erfassten Bilddaten. In diesem Beispiel wird beim Objekt 18 eine Unstimmigkeit zwischen der Signatur S₁₈ bei der ersten und zweiten Position P₁ und P₂ im Hinblick auf die mutmaßliche Ortsveränderung des Objekts 18 festgestellt, d.h. die erfindungsgemäße Plausibilitätsprüfung geht negativ aus. Die Stelle, an dem der Fehler aufgetreten ist wird in der Fig. 7 durch eine strichpunktierte Linie gekennzeichnet. Dem Bedienpersonal der Fördereinrichtung 1 werden nun Bilddaten beidseits der genannten Stelle angezeigt. In der Fig. 7 ist dieser Bereich durch einen strichlierten Rahmen gekennzeichnet.

In einer besonders vorteilhaften Variante wird diesem Ist-Zustand der Soll-Zustand gegenübergestellt. Dies können zum Beispiel Bilddaten desselben Ausschnitts sein, die an einer in Förderrichtung vorgelagerten Position; z.B. der ersten Position P₁, erfasst wurden. Durch Vergleich der Bilder kann der Maschinenführer sehr rasch herausfinden, welcher Art der Fehler ist und kann gegebenenfalls weitere Maßnahmen einleiten. Bevorzugt werden die fraglichen Objekte 17..19 an einen sogenannten "Klärplatz" gefahren, an dem die gewünschte Ordnung wieder hergestellt wird.

Eine Möglichkeit der Bildverarbeitung besteht auch darin, die Signale der quer zur Förderrichtung angeordneten Sensoren, als Signalfolgen aufzufassen. Analog dazu kann ein Endlosbild in längs der Förderrichtung ausgerichtete Streifen zerschnitten werden. Die in den Streifen enthaltene Farb- und/oder Helligkeitsinformation kann nun als Signalfolgen aufgefasst werden oder zu dessen Erzeugung herangezogen werden. In einem einfachen Beispiel wird angenommen, dass ein Endlosbild in zehn Streifen zerschnitten wird, beziehungsweise durch eine Scanner-Zeile mit zehn Pixeln Breite erfasst wird. Jedem Pixel kann ein bestimmter Wert für Rot, Grün Blau (respektive Gelb, Lila, Türkis) zugewiesen werden. Selbstverständlich sind auch andere Farbmodelle denkbar, beispielsweise Modelle, bei denen ein Helligkeitswert (Luminanz) sowie ein Wert für die Farbigkeit (Chrominanz) verwendet werden. Somit stehen 30 parallele Signalfolgen für die erfindungsgemäße Plausibilitätsprüfung zur Verfügung. Es wird schnell klar, dass die Bild- beziehungsweise Signalauflösung an die zur Verfügung stehende Rechenleistung angepasst werden sollte, denn der Rechenaufwand steigt rapide mit einer erhöhten Auflösung an. Eine verringerte Auflösung bedeutet zwar reduzierten Rechenaufwand, allerdings auch geringere Sicherheit bei der Identifikation von Objekten 17..1,9. Wegen der Miteinbeziehung der mutmaßlichen Ortsveränderung der Objekte 17..19 in die erfindungsgemäße Plausibilitätsprüfung kann aber mit deutlich geringerer Bild-beziehungsweise Signalauflösung das Auslangen gefunden werden als bei herkömmlichen Bildverarbeitungsalgorithmen.

Eine Eigenschaft eines Objekts 17..19, welche auf relativ einfache Weise erfasst werden kann, ist dessen Länge. Beispielsweise kann diese mittels einer Lichtschranke und mit Hilfe des von den Antrieben 2 vorgegebenen Soll-Wegs, während dem die Lichtschranke einen Belegt-Zustand meldet, oder Mit Hilfe der von den Antrieben 2 vorgegebenen Soll-Geschwindigkeit und der Zeit, während dem die Lichtschranke einen Belegt-Zustand meldet, leicht ermittelt werden. Die von einer Lichtschranke erhaltene Signalfolgen ist dabei eine einfache Impulsfolge, die zwischen den Werten 0 und 1 pendelt.

Alternativ oder zusätzlich kann auch die vom ersten Antrieb 2 abgegebene Kraft, beispielsweise in Form des vom Motor aufgenommenen Stroms, dazu herangezogen werden, die Objektlänge, beziehungsweise die genannte Impulsfolge zu ermitteln. Schwankungen im Motorstrom zeigen an, wann ein Objekt 17..19 vom betreffenden Antrieb 2 gerade gefördert wird oder nicht. In einer besonders vorteilhaften Ausführungsform werden die Informationen vom ersten Sensor 20 und vom ersten Antrieb 2 miteinander abgeglichen, um Fehler bei der initialen Erfassung der Objekte 17..19 weitgehend zu vermeiden.

In einer vorteilhaften Variante der Erfindung bleiben die Signaturen S₁₇, S₁₈, S₁₉ der Objekte 17..19 beim Vergleichen der Ist-Abfolge A₂ mit der Soll-Abfolge A₁ unberücksichtigt. Somit werden lediglich die Abstände a₁₇, a₁₈ zwischen den Objekten 17..19 überwacht. Umgekehrt kann auch der Abstand a₁₇, a₁₈ zwischen den Objekten 17..19 unberücksichtigt bleiben. Somit werden lediglich die Signaturen S₁₇, S₁₈, S₁₉ der Objekte 17..19 überwacht. Letzteres ist sinnvoll, um fehlende oder hinzugekommene Objekte zu identifizieren. Selbstverständlich können die Signaturen S₁₇, S₁₈, S₁₉ der Objekte 17..19 und die Abstände a₁₇, a₁₈ zwischen den Objekten 17..19 natürlich auch gleichzeitig überwacht werden.

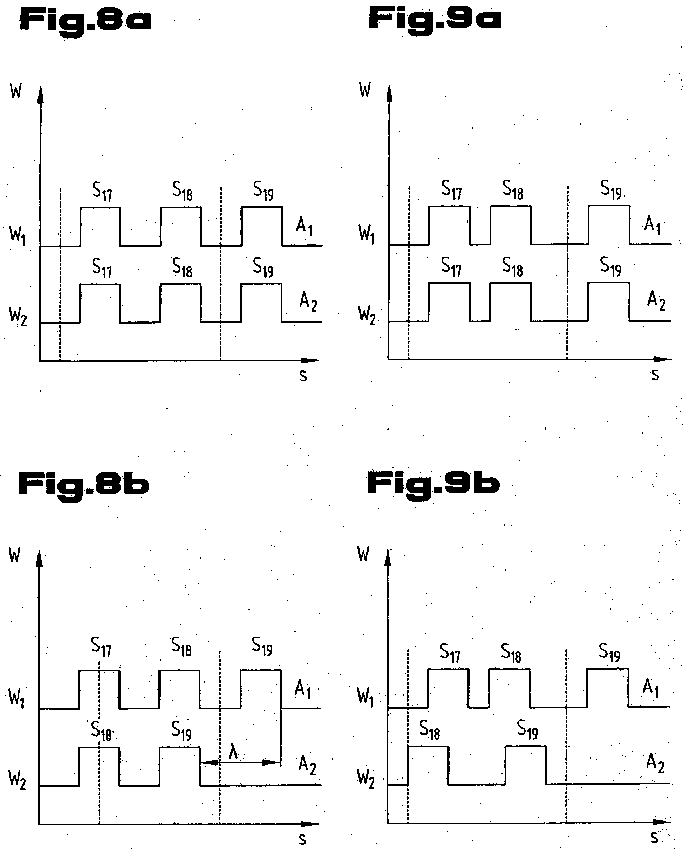

Die Figuren 8a bis 9b sollen nun verdeutlichen, dass periodische Signalfolgen A₁, A₂ unter Umständen Probleme verursachen können. Fig. 8a zeigt eine periodische Signalfolge A₁ (an der ersten Position P₁ erfasst) für identische Objekte 17..19 mit identischen Abständen und eine bereits um die mutmaßliche Objektverschiebung verschobene zweite Signalfolgen A₂ (an der zweiten Position P₂ erfasst). Strichpunktiert eingezeichnet ist das Beobachtungsfenster, in dem Sie die Signalfolgen A₁ und A₂ verglichen werden. Die beiden Signalfolgen A₁ und A₂ zeigen im Beobachtungsfenster eine völlige Übereinstimmung. Hier ist also alles in Ordnung. (Hinweis: in dieser Figur und den folgenden Figuren sind - völlig wahlfrei - Signalfolgen auf Wegbasis gezeigt. Die daraus resultierende Lehre bezieht sich aber gleichermaßen auch auf Signalfolgen auf Zeitbasis).

Fig. 8b zeigt nun eine Situation, in der die Objekte 17..19 in der Signalfolgen A₂ unglücklicherweise um eine Periodenlänge λ verschoben sind, beispielsweise weil die Antriebe 2 durchgerutscht sind. Im Beobachtungsfenster ist dies aber nicht zu erkennen, denn die Situation ist dieselbe wie in Fig. 8a. Folglich wird nach wie vor von einem ordnungsgemäßen Betrieb der Fördereinrichtung 1 ausgegangen, obwohl dies nicht so ist.

Fig. 9a zeigt - ähnlich wie Fig. 8a - wieder eine Signalfolge A₁ für identische Objekte 17..19, nun allerdings mit unterschiedlichen Abständen. Die Signalfolgen A₁ ist somit nicht periodisch. In Fig. 9a zeigen die Signalfolgen A₁ und A₂ wie in Fig. 8a Übereinstimmung. Es ist also alles in Ordnung.

Fig. 9b zeigt eine Situation, in der die Objekte 17..19 bzw. die Signalfolgen A₂ um dieselbe Strecke verschoben sind wie in Fig. 8b. Im Beobachtungsfenster ist nun aber deutlich zu sehen, dass zwischen den Signalfolgen A₁ und A₂ keine Übereinstimmung mehr vorliegt. Der erfindungsgemäße Algorithmus löst nun richtigerweise eine Fehlerbehandlung aus.

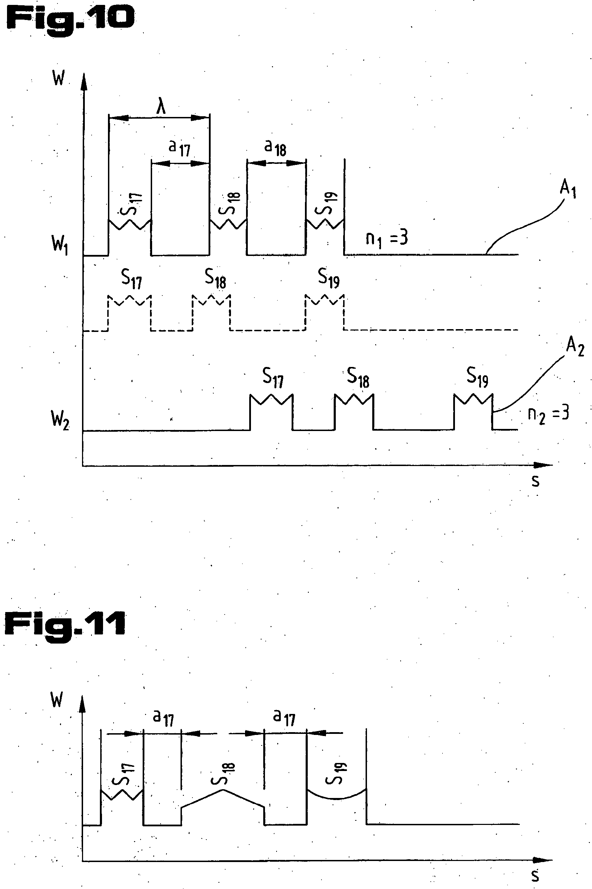

Fig. 10 zeigt eine weitere Soll-Abfolge A₁ von Objekten 17..19 gleicher Signatur S₁₇, S₁₈, S₁₉ zwischen denen gleiche Abstände a₁₇, a₁₈ vorliegen. Aus der Fig. 10 ist leicht zu sehen, dass die Signalfolge A₁ - zumindest im abgegrenzten Bereich zwischen erster und letzter Signatur S₁₇ und S₁₉ eine Wellenlänge λ aufweist (bei einer Signalfolge auf Zeitbasis würde äquivalent eine Periodendauer vorliegen). Dies hat - wie bereits anhand von Fig. 8b erläutert wurde - zur Folge, dass die Korrelationsfunktion an mehreren Stellen, nämlich im Abstand der Wellenlänge λ Maxima aufweist, sodass die absolute Position der Objekte 17..19 nicht ohne weiteres festgestellt werden kann. Entweder es werden zusätzliche Informationen verarbeitet oder es muss ein längerer Beobachtungszeitraum gewählt werden, sodass eine nicht periodische Impulsfolge resultiert. Im gezeigten Beispiel sollte daher ein Bereich > 3λ betrachtet werden.

Dieser lange Beobachtungszeitraum führt nun dazu, dass Unregelmäßigkeiten im Betrieb der Fördereinrichtung 1 oder gar Betriebsstörungen gegebenenfalls erst relativ spät entdeckt werden. Aus diesem Grund wird eine Soll-Abfolge A₁ in einer bevorzugten Variante derart vorgegeben, dass deren Wellenlänge λ (beziehungsweise Periodendauer) größer ist als ein vorgebbarer Wert. Dabei werden zwischen den Objekten 17..19, insbesondere wenn diese gleiche Signatur S₁₇, S₁₈, S₁₉ aufweisen, unterschiedliche Abstände a₁₇, a₁₈ vorgeschen.

Im gezeigten Beispiel wird an der ersten Position P₁ eine "ungünstige" Soll-Abfolge A₁ ermittelt. Eine Steuerung der Fördereinrichtung 1 modifiziert diese Soll-Abfolge A₁ nun dahingehend, dass die Wellenlänge λ größer, beziehungsweise größer als ein vorgebbarer Wert wird. Zu diesem Zweck wird das Objekt 18 etwas nach vor verschoben (siehe die strichlierte Soll-Abfolge in Fig. 10), d.h. gegenüber den anderen Objekten 17 und 19 etwas beschleunigt. Die Steuerung steuert dazu die Antriebe 2 entsprechend an. Wie aus der Fig. 10 leicht ersichtlich ist, liegt nun keine periodische Signalfolge mehr vor. An der zweiten Position P₂ wird nun wie gehabt eine Ist-Abfolge A₂ erfasst und mit der Soll-Abfolge A₁ verglichen. Die Kreuzkorrelationsfunktion liefert nun nur mehr ein Maximum, sodass die Absolutposition der Objekte 17..19 genau festgestellt werden kann. Selbstverständlich kann eine größere Wellenlänge λ auch durch Verschieben anderer Objekte 17..19 hergestellt werden.

Generell nimmt die Wahrscheinlichkeit, dass ein Fehler unentdeckt bleibt (siehe Fig. 8b) mit zunehmender Wellenlänge λ und zunehmender Größe des Beobachtungsfensters ab, allerdings wächst damit auch der Steuerung- und Rechenaufw-and. Hier sollte also abgewogen werden, welches Risiko eines unentdeckten Fehlers noch tolerierbar ist. Dabei sollte berücksichtigt werden, dass in den Signalfolgen A₁, A₂ längere und kürzere Wellenlängen auftreten können. Beispielsweise könnte die in Fig. 8b gezeigte Dreiergruppe von Objekten 17..19 in einem größeren Abstand nochmals vorkommen. Eine Verschiebung um diesen Abstand fürde (mit dem vorliegenden Beobachtungsfenster) ebenfalls nicht erkannt werden.

Alternativ kann aber auf das exakte Identifizieren eines bestimmten Objektes 17..19 verzichtet werden, wenn eine Überprüfung auf Objekt-Gleichartigkeit als ausreichend erachtet wird. In diesem Fall lösen bloß jene Objekte 17..19 eine Fehlerbehandlung aus, die anders sind als die anderen Objekte 17..19 oder anders als erwartet. Ein Beispiel wäre eine Fördereinrichtung 1, auf der lauter gleichartige Konservendosen befördert werden. Die Identifikation einer bestimmten Konservendose ist in der Regel nicht gefordert, jedoch sollten beispielsweise fehlerhafte Konservendosen oder Fremdkörper detektiert werden. In diesem Fall ist die Überprüfung auf Objekt-Gleichartigkeit und die Anzahl der gleichartigen Objekte 17..19 normalerweise ausreichend.

Abweichend von der in der Fig. 10 dargestellten Verfahrensweise wird daher die bei der ersten Position P₁ erfasste Signalfolge beibehalten, also nicht wie durch die strichlierte Signalfolge angegeben abgeändert. Dafür wird aber die Anzahl der die erste Position P₁ passierenden Objekte 17..19 erfasst, beispielsweise durch einen Sensor, welcher den Belegungszustand eines Erfassungsbereiches detektieren und daraus die erwähnte Anzahl ermitteln kann. Im gegebenen Beispiel beträgt die Soll-Anzahl n₁=3. An der zweiten Position P₂ wird im störungsfreien Betrieb der Fördereinrichtung 1 dieselbe Signalfolgen wie an der ersten Position P₁ erfasst, d.h. Soll-Abfolge A₁ und Ist-Abfolge A₂ sind identisch. Alternativ kann geprüft werden ob die Ist-Signaturen der Objekte 17..19 einer Soll-Signatur beziehungsweise Referenz-Signatur entsprechen. Zusätzlich wird auch überprüft, ob die Ist-Anzahl n₂ mit der Soll-Anzahl n₁ übereinstimmt. Im gegebenen Beispiel stimmen sowohl Soll-Abfolge A₁ und Ist-Abfolge A₂ als auch Soll-Anzahl n₁ und Ist-Anzahl n₂ überein. Es kann daher von einem störungsfreien Betrieb ausgegangen werden. Wird dagegen ein gleichartiges Objekt 17..19 (d.h. in unserem Fall eine ordnungsgemäße Konservendose) entnommen, so äußert sich dies in einer Abweichung zwischen Soll-Anzahl n₁ und Ist-Anzahl n₂. Eine z.B. verbeulte Konservendose oder ein Fremdkörper würde sich dagegen in einer Abweichung zwischen einer Ist-Signatur von einer Soll-Signatur (Referenz-Signatur) äußern. In beiden Fällen kann daher eine Fehlerbehandlung ausgelöst werden.

Fig. 11 zeigt nun eine Situation, in der Objekte 17..19 unterschiedlicher Signatur S₁₇, S₁₈, S₁₉ gefördert werden. Wie leicht einsehbar ist, ist das Vorsehen unterschiedlicher Abstände a₁₇, a₁₈ für die Realisierung einer "langen" Wellenlänge λ nicht erforderlich. Um den Durchsatz der Fördereinrichtung 1 zu maximieren, werden nun gleiche Abstände a₁₇, a₁₈ zwischen den Objekten 17..19 vorgesehen, mit denen die geforderte Sicherheit vor Kollisionen von Objekten 17..19 (gerade) noch erfüllt werden kann.

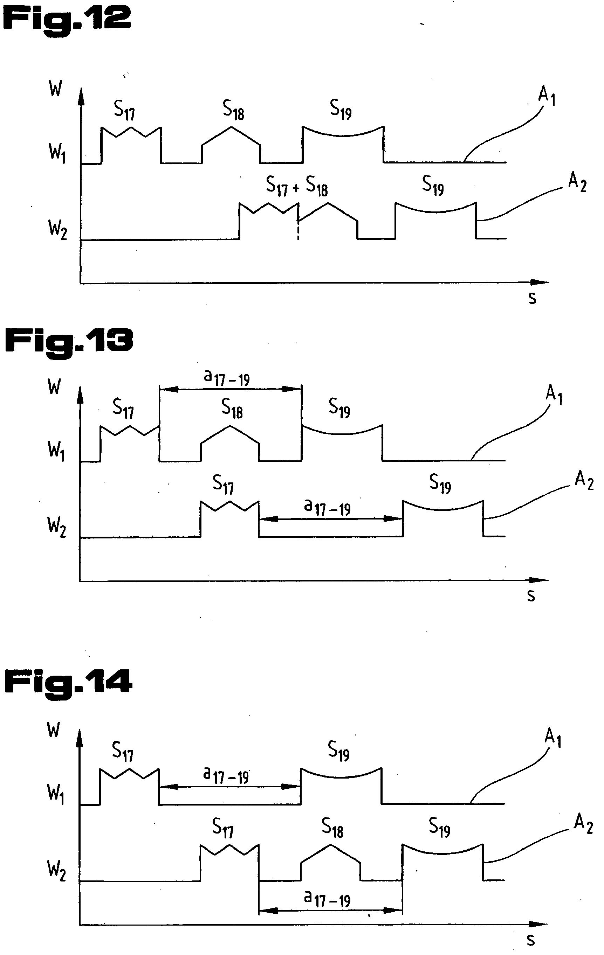

Fig. 12 zeigt einen Ablauf, bei dem das Objekt 17 zwischen erster Position P₁ und zweiter Position P₂ gegenüber den anderen Objekten 18 und 19 verzögert wird und schließlich am zweiten Objekt 18 anliegt. Vorteilhaft wird nun geprüft, ob eine in der Ist-Abfolge A₂ enthaltene Summensignatur S₁₇+S₁₈ den Signaturen S₁₇, S₁₈ zweier oder mehrerer aufeinander folgender Objekte 17,18 in der Soll-Abfolge A₁ entspricht, wenn eine Signatur S₁₇+S₁₈ in der Ist-Abfolge A₂ anders ausfällt als die in der Soll-Abfolge A₁ erwartete Signatur S₁₇. Trifft dies zu, so wird ein Signal für fehlenden Abstand abgegeben. Auf diese Weise kann festgestellt werden, ob zwischen zwei Objekten 17, 18 überhaupt kein Abstand mehr vorhanden ist.

Fig. 13 zeigt einen Ablauf, bei dem das Objekt 18 zwischen erster Position P₁ und zweiter Position P₂ verschwindet, d.h. aus der Fördereinrichtung 1 entnommen wird oder aus dieser herausfällt. Vorteilhaft wird nun geprüft, ob ein in der Ist-Abfolge A₂ enthaltener Abstand a₁₇₋₁₉ von einem ersten Objekt 17 zu einem benachbarten zweiten Objekt 19 einem Abstand a₁₇₋₁₉ zwischen dem ersten Objekt 17 und dem in der Soll-Abfolge A₁ nicht benachbarten zweiten Objekt 19 entspricht, wenn ein Objektabstand a₁₇₋₁₉ in der Ist-Abfolge A₂ länger ausfällt als der in der Soll-Abfolge A₁ erwartete Objektabständ a₁₇. Trifft dies zu, so wird ein Signal für ein fehlendes drittes Objekt 18 abgegeben. Auf diese Weise können fehlende Objekte 18 festgestellt werden. Das Alarmsignal kann dabei unspezifisch sein (d.h. keine Angabe über das Objekt 18 enthalten) oder spezifisch (z.B. "Objekt 18 fehlt").

Fig. 14 zeigt nun einen Ablauf, bei dem ein Objekt 18 zwischen erster Position P₁ und zweiter Position P₂ hinzugefügt wird, d.h. in die Fördereinrichtung 1 gelegt wird oder auf diese hinauffällt. Vorteilhaft wird nun geprüft, ob ein in der Ist-Abfolge A₂ enthaltener Abstand a₁₇₋₁₉ von einem ersten Objekt 17 zu einem nicht benachbarten zweiten Objekt 19 einem Abstand a₁₇₋₁₉ zwischen dem ersten Objekt 17 und dem in der Soll-Abfolge A₁ benachbarten zweiten Objekt 19 entspricht, wenn ein Objektabstand a₁₇ in der Ist-Abfolge A₂ kürzer ausfällt als der in der Soll-Abfolge A₁ erwartete Objektabstand a₁₇₋₁₉. Trifft dies zu, so wird ein Signal für ein hinzugefügtes drittes Objekt 18 abgegeben. Auf diese Weise können hinzugekommene Objekte 18 festgestellt werden.

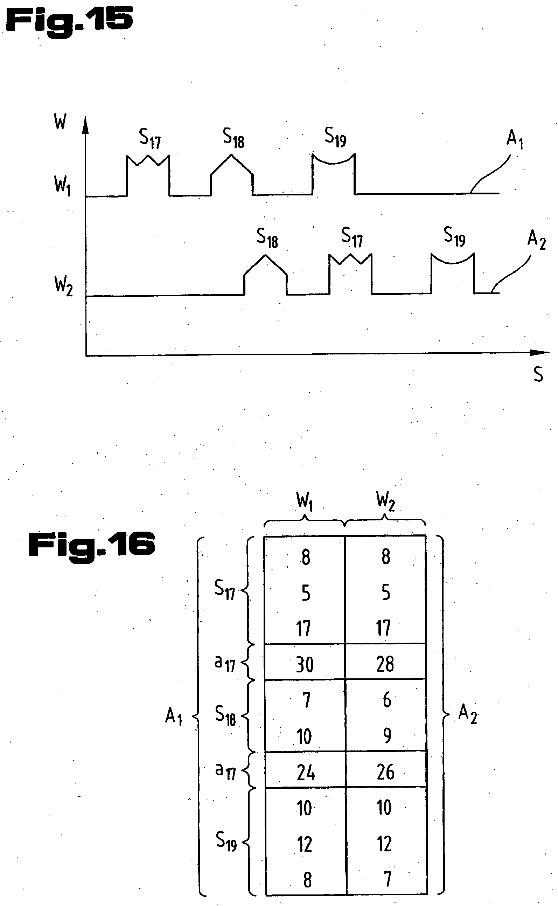

Schließlich wird anhand von Fig. 15 erläutert wie vertauschte Objekte 17, 18 detektiert werden können. Dabei wird geprüft, ob die Positionen zweier in der Soll-Abfolge A₁ enthaltener Signaturen S₁₇, S₁₈ in der Ist-Abfolge A₂ vertauscht sind wenn eine Signatur S₁₈ in der Ist-Abfolge A₂ anders ausfällt als die in der Soll-Abfolge A₁ erwartete Signatur S₁₇. Wenn dies zutrifft wird ein Signal für vertauschte Objekte 17, 18 abgegeben. Das Alarmsignal kann wieder unspezifisch sein (d.h. keine Angabe über die Objekte 17, 18 enthalten) oder spezifisch (z.B. "Objekt 17 und 18 vertauscht").

Wie gezeigt werden konnte, können sowohl zu große Abstände a₁₇, a₁₈ detektiert werden (vermindern die Kapazität der Fördereinrichtung 1) oder aber auch zu kleine (können Störungen verursachen). Ein falscher Abstand a₁₇, a₁₈ kann in Folge durch entsprechende Ansteuerung der Antriebe 2 korrigiert werden. Neben falschen Abständen a₁₇, a₁₈ können aber auch fehlende, hinzugekommene oder vertauschte Objekte 18 erkannt werden.

Fig. 16 zeigt nun eine Tabelle mit numerisch gespeicherten Werten W₁, W₂ der ermittelten (oder vorgegebenen) Objektsignaturen S₁₇, S₁₈, S₁₉ und Abstände a₁₇, a₁₈ bei der ersten Position P₁, sowie numerisch gespeicherten Werten W₁, W₂ der ermittelten Objektsignaturen S₁₇, S₁₈, S₁₉ und Abstände a₁₇, a₁₈ bei der zweiten Position P₂. Durch Vergleich der Werte W₁, W₂ beziehungsweise der Objektsignaturen S₁₇, S₁₈, S₁₉ sowie der Abstände a₁₇, a₁₈ kann unmittelbar eine Abweichung zwischen Soll-Abfolge A₁ und Ist-Abfolge A₂ ermittelt werden. Als Schwellwert für die Auslösung eines Alarmsignals können maximale absolute oder relative Abweichungen zwischen zwei Werten W₁, W₂ beziehungsweise zwischen Objektsignaturen S₁₇, S₁₈, S₁₉ sowie zwischen Abständen a₁₇, a₁₈ vorgesehen werden. Beispielsweise kann auch der Mittelwert mehrerer Abweichungen oder der Maximalwert mehrerer Abweichungen mit einem Schwellwert verglichen werden.

Die Tabelle in Fig. 16 ist aber nicht nur auf die Betrachtungsweise als Soll-Abfolge A₁ und Ist-Abfolge A₂, d.h. auf eine sequentiellen Prüfung aufeinanderfolgender Werte W₁, W₂, beschränkt, sondern kann auch im Kontext zu den Abfragen aus Fig. 4 und 5 gesehen werden, welche prinzipiell eine Prüfung beliebiger Werte W₁, W2 ermöglichen. Denkbar ist an dieser Stelle auch das Prüfen nur einiger weniger, im Rahmen einer Stichprobe zufällig ausgewählter Werte W₁, W₂ (zum Beispiel die zweite und die siebente Zeile), um die erfindungsgemäße Plausibilitätsprüfung mit vergleichsweise wenig Rechenleistung durchführen zu können. Die in der Tabelle enthaltenen Werte W₁, W₂ werden dann nicht als Signalfolgen A₁, A₂ sondern als (nicht notwendigerweise aufeinander folgende) Einzelwerte verarbeitet. Folglich verschwimmen hier die Grenzen zwischen einem Verfahren zum Betrieb einer Fördereinrichtung auf Basis des Vergleichs von Einzelwerten W₁, W₂ und auf Basis des Vergleichs von Signalfolgen A₁, A₂. Eine eindeutige Trennung der beiden vorgestellten Verfahren ist an dieser Stelle nicht mehr gegeben.

Wie bereits erwähnt wurde, können die Werte W₁, W₂ in einer weiteren vorteilhaften Variante der Erfindung kodiert werden. Die Plausibilitätsprüfung kann dann auf Basis der kodierten oder wieder dekodierten Werte erfolgen. Da die Signalfolgen A₁, A₂ in aller Regel digital verarbeitet werden, können sie als Bit-Strom aufgefasst werden. Als Beispiel wird die in Fig. 9a gezeigte Signalfolge A₁ herangezogen, welche beispielsweise das Signal einer Lichtschranke darstellt. Dieses wird mit einer beliebigen Frequenz abgetastet, sodass je nach Frequenz ein mehr oder minder fein aufgelöster Bit-Strom entsteht, beispielsweise: 0000111100111100000011110000. Da die Signalfolgen A₁, A₂ an verschiedenen Position nen P₁, P₂ aufgenommen werden, müssen sie für die Plausibilitätsprüfung zwangsläufig an einen Ort übertragen werden, an dem der Vergleich der Signalfolgen A₁, A₂ tatsächlich stattfindet. Es leuchtet ein, dass dies bei den unter Umständen sehr hohen Mengen an Daten eine erhebliche Belastung für das Datennetz einer Fördereinrichtung 1 darstellt. Aus diesem Grund wird vorgeschlagen, bestimmten Bit-Mustern Symbole zuzuordnen. Ein erstes Beispiel soll dies verdeutlichen. Die folgende Tabelle zeigt verschiedene Muster, ein jeweils zugeordnetes alphanummerisches Symbol, sowie eine Repräsentation im Übertragungskanal.

| Muster | Symbol | Übertragungskanal |
|---|---|---|
| 0 | A | 000 |
| 00 | B | 001 |
| 0000 | C | 010 |
| 00000000 | D | 011 |
| 1 | E | 100 |
| 11 | F | 101 |
| 1111 | G | 110 |
| 11111111 | H | 111 |

Die zuvor genannte Bitfolge 0000111100111100000011110000 kann nun auch als CGBGCBGC ausgedrückt werden. Insgesamt wurden acht Symbole zur Kodierung verwendet, die nun ihrerseits wieder als Binärzahl ausgedrückt werden können. Somit kann CGBGCBGC auch als 010110001110010001110010 Die komprimierte Signalfolgen ist hier nur geringfügig (nämlich um vier Bits) kürzer als die Ursprungsfolge, jedoch ist leicht einsehbar, dass sich das Verhältnis bei Verwendung des Symbols D und H stark verbessert. Das bedeutet, dass feiner aufgelöste Signalfolgen A₁, A₂ in der Regel stärker komprimiert werden können. Der Übertragungskanal wird bei Verwendung der komprimierten Daten folglich weniger belastet. Der Zwischenschritt über die Symbole A..H kann dabei natürlich auch einfach übersprungen werden.

Die Plausibilitätsprüfung selbst kann nun ebenfalls auf Basis der komprimierten Daten erfolg gen, also auf Basis der Abfolge CGBGCBGC oder der Abfolge 010110001110010001110010. Somit wird nicht nur das Datennetz weniger belastet, sondern es wird auch weniger Prozessorleistung für den Vergleich der Signalfolgen A₁, A₂ benötigt. Selbstverständlich können die Daten aber auch wieder dekodiert werden, sodass die Plausibilitätsprüfung auf Basis der ursprünglichen Daten erfolgt. Im gezeigten Beispiel werden die Daten verlustlos komprimiert, das heißt die ursprünglichen Daten können fehlerfrei rekonstruiert werden.

In einem zweiten Beispiel wird eine weitere Möglichkeit der Kodierung vorgestellt, die noch höhere Kompressionsraten erlaubt. Prinzipiell können die Signalfolgen A₁, A₂ als 0/1-Transitionen und 1/0-Transitionen mit unterschiedlichen Abständen aufgefasst werden. Bei der folgenden Kodierung werden die 0/1-Trasitionen mit dem Symbol A und die 1/0-Transitionen mit dem Symbol B assoziiert. Zusätzlich wird der Abstand als numerischer Wert angegeben. Im folgenden Beispiel wird vor die Abfolge 0000111100111100000011110000 eine 1 gedacht um eine Transition zu fingieren. Es ergibt sich also (1)0000111100111100000011110000

| Symbol | Übertragungskanal |
|---|---|
| A | 000 |
| B | 001 |
| 1 | 000 |
| 2 | 001 |
| 3 | 010 |
| 4 | 011 |
| 5 | 100 |
| 6 | 101 |
| 7 | 110 |
| 8 | 111 |

Obige Folge kann also als B4A4B2A4B6A4B4 geschrieben werden. Im Überträgungskanal ergibt sich 00101100001100100100001100110100011001011 (da laut Konvention dem Symbol A oder B immer ein nummerischer Wert folgt, können 000, und 001 doppelt belegt werden). Im gezeigten Beispiel ergibt sich durch die Kompression kein Vorteil, jedoch ist einleuchtend, dass sich mit zunehmendem Abstand zwischen den Transitionen, d.h. bei feiner aufgelösten Signalfolgen A₁, A₂ ein erheblicher Vorteil ergibt. Der Zwischenschritt über die alphanummerischen Symbole kann natürlich auch bei diesem Beispiel übersprungen werden. Die Plausibilitätsprüfung selbst kann ebenfalls wiederum auf Basis der Folge B4A4B2A4B6A4B4, der Folge im Übertragungskanal (also jeweils in kodierter Form) oder auf Basis der ursprünglichen Signalfolgen A₁, A₂ (also in wieder dekodierter Form) erfolgen. Der vorgestellte Algorithmus arbeitet wiederum verlustlos. Selbstverständlich können die Symbole auch komplexere Muster repräsentieren, bis hin zu ganzen Signaturen S₁₇..S₁₈, Beispielsweise könnte ein Kodierer an der ersten oder zweiten Position P₁, P₂ die erfassten Werte W₁, W₂ in" Konservendose Marke x, Abstand 3, Konservendose Marke y, Abstand 5, umsetzen. Bei komplexen Signaturen S₁₇..S₁₈ kann dies eine erhebliche Entlastung des Datennetzes der Fördereinrichtung 1 sowie der benötigten Rechenleistung für die Plausibilitätsprüfung bedeuten.

Zusammenfassend kann gesagt werden, dass die Soll-Positionen der Objekte 17.. 19 beziehungsweise die Abstände a₁₇, a₁₈ zwischen denselben in den verschiedenen Betriebsarten in an sich bekannter Weise mit Hilfe einer Soll-Geschwindigkeit der Antriebe 2 und der Zeit, welche seit Passieren eines Referenzpunkts P₁ verstrichen ist, oder mit Hilfe eines von den Antrieben 2 vorgegebenen Soll-Weges, welcher seit Passieren eines Referenzpunkts P₁ durchquert ist, bestimmt werden können. Erfindungsgemäß wird wie bereits beschrieben geprüft, ob die Ist-Positionen der Objekte 17..19 den Soll-Positionen entsprechen. Ein besonderer Vorteil der Erfindung besteht nun aber auch darin, dass der Betrieb der Fördereinrichtung 1 prinzipiell auch nur mit Hilfe einer Plausibilitätsprüfung im Hinblick auf die Übereinstimmung des ersten Wertes W₁ mit dem zweiten Wert W₂ möglich ist. Das heißt, das erfindungsgemäße Verfahren wird dann nicht bloß passiv zur Überprüfung des Betriebs der Fördereinrichtung 1 eingesetzt, sondern aktiv zu deren Steuerung/Regelung. Auf diese Weise kann ein Notbetrieb der Fördereinrichtung 1 selbst dann aufrechterhalten werden, wenn die nach dem Stand der Technik bekannte Positions- und Abstandsbestimmung über den Referenzpunkt P₁ nicht möglich ist, weil z.B. wichtige Komponenten ausgefallen sind. Dieser Notbetrieb kann gegebenenfalls auch während des Tauschs defekter Komponenten aufrechterhalten werden. Auch das "Hochfahren" der Fördereinrichtung 1 nach einem Stromausfall, bei dem die Soll-Positionen der Objekte 17..19 verloren gegangen sind, mit Hilfe von gespeicherten Signaturen S₁₇, S₁₈, S₁₉ ist möglich. Hierbei wird die Ist-Position der Objekte 17..19 aufgrund deren Signaturen S₁₇, S₁₈, S₁₉ ermittelt und in der Steuerung der Fördereinrichtung 1 deren Soll-Position zugewiesen, welche solcherart regeneriert werden kann. Prinzipiell kann auch ein Maximum einer Korrelationsfunktion zwischen einer Soll-Abfolge A₁ und einer Ist-Abfolge A₂ zur Postitionsbestimmung der Objekte 17..19 herangezogen werden, denn die Korrelationsfunktion hat dann ihr Maximum (vorausgesetzt die Soll-Abfolge A₁ und die Ist-Abfolge A₂ weisen noch eine grundsätzliche Ähnlichkeit auf), wenn die Soll-Abfolge A₁ und die Ist-Abfolge A₂ um den von den Objekten 17..19 zurückgelegten Weg (respektive um die verstrichene Zeit) gegeneinander verschoben werden. Die erfindungsgemäße Fördereinrichtung 1 ist damit nicht nur besonders sicher sondern auch besonders fehlertolerant. Zudem kann dieses reduzierte Verfahren die Basis einer eigenständigen Erfindung bilden. Selbstverständlich können beliebig viele zweite Positionen P₂ vorgesehen werden. Dabei kann das erfindungsgemäße Verfahren an jeder zweiten Position P₂ durchgeführt werden, d.h. beispielsweise die jeweils ermittelte Ist-Abfolge A₂ mit der an der ersten Position P₁ vorliegenden oder vorgegebenen Soll-Abfolge A₁ verglichen werden. Alternativ oder zusätzlich ist vorstellbar, dass das erfindungsgemäße Verfahren rekürsiv ausgeführt wird, das heißt, nach Durchführung der erfindungsgemäßen Plausibilitätsprüfung anhand der an der ersten Position P₁ und an zweiten Position P₂ ermittelten Werte W₁, W₂ beziehungsweise Signalfolgen A₁, A₂, wird die zweite Position P₂ zur ersten Position P₁ im Bezug auf eine weitere zweite Position. Es folgt eine weitere Plausibilitätsprüfung anhand der an der neuen zweiten Position P₂ ermittelten Werte W₂ beziehungsweise Signalfolgen A₂ mit der an der neuen ersten Position P₁ (entspricht der alten zweiten Position P₂) vorliegenden oder vorgegebenen Werte W₁ beziehungsweise Signalfolgen A₁ usw.

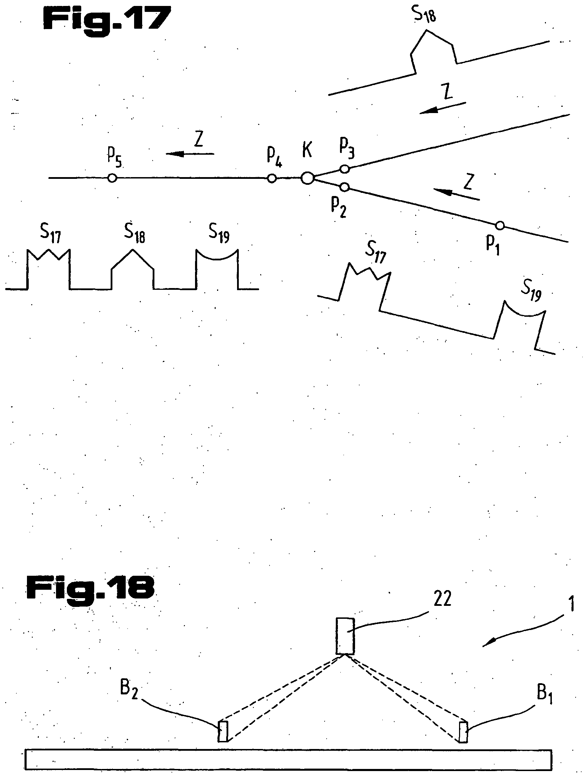

Vorteilhaft sind die Erfassungspositionen P₁, P₂ im Bereich von Knoten K der Fördereinrichtung 1 angeordnet. An diesen Knoten K teilt sich der Objektstrom oder wird zusammengeführt, je nach Förderrichtung. Fig. 17 zeigt einen solchen beispielhaften Knoten K, sowie mehrere Erfassungspositionen P₁..P₅. In der Darstellung verläuft die Förderrichtung z - wie dies mit Pfeilen angedeutet ist - von rechts nach links. Im rechten unteren Abschnitt passieren ein Objekt 17 und 19 die erste und die zweite Erfassungsposition P₁ und P₂. Im rechten oberen Abschnitt passiert ein Objekt 18 die Erfassungsposition P₃. Am Knoten K werden die beiden Objektströme zusammengeführt An der Erfassungsposition P₄ und P₅ wird folglich die Summe der an den Erfassungspositionen P₂ und P₃ erfassten Signalfolgen detektiert. Im gezeigten Beispiel wird das Objekt 18 zwischen die Objekte 17 und 19 eingefügt. Die Soll-Abfolge für die Position P₄ ist also die Summe der Signalfolgen aus dem rechten unteren und dem rechten oberen Abschnitt. Wird diese Routing-Information der Objekte 17..19 nicht berücksichtigt, so werden das Objekt 18 / die Objekte 17 und 19 an der Position P₄ oder P₅ als unerlaubterweise hinzugefügte Objekte interpretiert, wenn die Signalfolge aus dem unteren / oberen Abschnitt als Referenzfolge herangezogen wird. Durch die Berücksichtigung der Routing-Daten wird aber eine ungewollte Fehlerbehandlung unterdrückt und der Betrieb der Fördereinrichtung 1 wird nach wie vor als ordnungsgemäß eingestuft.

Bei umgekehrter Förderrichtung z wird der von links kommende Objektstrom beim Knoten K in zwei Teilströme aufgeteilt. Auch in diesem Fall sollten die Routing-Daten der Objekte 17..19 berücksichtigt werden, um nicht eine ungewollte Fehlerbehandlung auszulösen. Beispielsweise kann die Signalfolge im rechten oberen Abschnitt durch Subtraktion der Signalfolge des rechten unteren Abschnittes von der Signalfolgen im linken Abschnitt erhalten werden.

Fig. 18 zeigt nun eine Variante der Erfindung, bei welcher der erste und der zweite Erfassungsbeteich B₁ und B₂ von einem einzigen Sensor 22 erfasst, beziehungsweise abgetastet wird. Beispielsweise handelt es sich bei dem Sensor 22 um einen Laser, welcher über der Fördereinrichtung 1 angeordnet ist und verschwenkt werden kann. Dabei reicht es aus, wenn anstelle des ganzen Gerätes bloß der Laserstrahl in an sich bekannter Weise mit Hilfe eines Spiegels abgelenkt werden kann. Der Laserstrahl kann nun zwischen erstem und zweitem Erfassungsbereich B₁ und B₂ hin- und her bewegt werden, beziehungsweise kann diese auch zeilenweise abtasten. Moderne Laserablenkeinheiten sind in der Regel derart schnell, dass sich die zeitliche Verzögerung zwischen Erfassung des ersten Bereichs B₁ und des zweiten Bereichs B₂ für die Erfindung nur unwesentlich auswirkt. Für die Belange der Erfindung kann daher in der Regel von einer quasi-gleichzeitigen Erfassung ausgegangen werden. Durch au sich bekannte Laserabstandsmessung, die prinzipiell auch ohne eigens dafür vorgesehenen Reflektor möglich ist, kann nun beispielsweise festgestellt werden, ob sich überhaupt Objekte 17..19 im Erfassungsbereich B₁, B₂ befinden, da sich der vom Sensor 22 gemessene Abstand bei Eintritt eines Objektes 17..19 in den Erfassungsbereich B₁, B₂ ja sprunghaft ändert (streng genommen gilt dies aber nur für Objekte 17..19 einer gewissen Höhe, also nicht flachen Objekten 17..19 - es sei denn, der Sensor 22 misst bei leerem Erfassungsbereich B₁, B₂ durch die Fördereinrichtung 1 hindurch, z.B. kann der Laser 22 den Raum zwischen zwei Rollen 5 und 6 abtasten). Selbstverständlich können natürlich auch Reflektoren bei den Erfassungsbereichen B₁ und B₂ vorgesehen werden, wenngleich hier in der rauen Betriebsumgebung stets die Gefahr von Verschmutzung und Bruch präsent ist. Vorteilhaft werden so auch flache Objekte 17..19 auf jeden Fall detektiert. Zusätzlich zum Belegungszustand eines Erfassungsbereiches B₁, B₂ kann ein Läserscanner natürlich auch umfassendere Eigenschaften eines Objekte 17..19 erfassen, beispielsweise dessen Form oder Oberflächenstruktur.

In gleicher Weise können auch andere Sensoren 22 angewendet werden, welche ihre Umgebung strahlförmig erfassen können. Als Beispiele seien hier Ultraschall-Abstandssensoren und Radar-Abstandssensoren beziehungsweise eine Video-Kamera mit angeschlossener Bildverarbeitung genannt. Selbstverständlich können diese auch für die Erfassung mehrerer Bereiche B₁, B₂ vorgesehen werden und selbstverständlich können auch mehrere solcher Sensoren vorgesehen werden. Der besondere Vorteil an dieser Variante der Erfindung liegt darin, dass die Erfassungsbereiche B₁, B₂ sehr flexibel erfolgen kann, sowohl hinsichtlich ihrer Form und Größe als auch ihrer Position. Durch entsprechende Umprogrammierung, z.B. der Ablenkeinheit des Laserstrahls, können die Erfassungsbereiche B₁, B₂ bei veränderten Betriebsbedingungen einfach umgeordnet werden.

In Fig. 18 befindet sich der Sensor 22 nur in geringer Höhe über der Fördereinrichtung 1. Denkbar ist jedoch auch, dass sich der Sensor 22 in größerem Abstand zur Fördereinrich- tung 1 befindet. Beispielsweise kann der Sensor 22 an der Decke einer Halle, in der sich die Fördereinrichtung 1 befindet, angebracht sein. In diesem Fall kann der Sensor 22 zum Beispiel beide Erfassungsbereiche B₁ und B₂ unter relativ steilem Winkel erfassen. Aus der in der Fig. 18 gezeigten Position ist dies nur unter sehr flachem Winkel möglich, was die Wahrscheinlichkeit für Fehlerfassungen stark erhöht.

Die Erfindung wurde vorwiegend anhand von Erfassungsbereichen B₁ und B₂ erläutert. Diese können durch verschiedene Arten von Sensoren 20..22 abgetastet werden. Beispielsweise können Lichtschranken mit und ohne Reflektor, einfache mechanische Schalter, welche durch die Objekte 17..19 betätigt werden, Ultraschall-Sensoren, Laser, Radar-Sensoren, kapazitive Sensoren, induktive Sensoren, Video-Kameras mit Bildverarbeitung, Infrarot-Sensoren, aber auch Barcode-Leser, RFID-Lesegeräte usw. verwendet werden. Selbstverständlich sind auch Mischformen der genannten Sensoren denkbar.

Weiterhin wurde die Erfindung vorwiegend anhand von graphisch dargestellten Signalfolgen bzw. -verläufen erläutert. Selbstverständlich ist das Gesagte aber auch auf numerisch verarbeitete Werte anwendbar. Beispielsweise ist eine Wellenlänge/Periodendauer T, λ einer Soll-Abfolge A₁ oder Ist-Abfolge A₂ in einer Tabelle nach Fig. 16 insofern sichtbar, als sich die Abfolge von Werten W₁, W₂ periodisch wiederholt. Bei z.B. einer Abfolge von Objekten 17..19 gleicher Signatur S₁₇, S₁₈, S₁₉ mit gleichen Abstände a₁₇, a₁₈ zwischen diesen wiederholen sich die Werte alle zwei Zeilen. Die Wellenlänge λ oder Periodendauer T kann in diesem Fall daher auch als Anzahl von Zeilen angegeben oder aufgefasst werden. Ähnlich wie beim Vergleich von Signalfolgen, bei denen nicht zwangsläufig klar ist, welche Signatur S₁₇, S₁₈, S₁₉ zu welchem Objekt 17..19 gehört, ist auch hier nicht ohne weiteres klar, welche Zeile der Soll-Abfolge A₁ mit welcher Zeile der Ist-Abfolge A₂ verglichen werden soll, das heißt es ist nicht klar welcher der identischen Signaturen S₁₇, S₁₈, S₁₉ welchem Objekt 17..19 zugeordnet ist. Eine Verschiebung zwischen Soll-Abfolge A₁ oder Ist-Abfolge A₂ bleibt daher unter Umständen unentdeckt.

Die Umsetzung des erfindungsgemäßen Verfahrens kann in Hardware und/oder Software erfolgen. Beispielsweise werden in einem Speicher entsprechende Programmschritte und Paarmeter abgespeichert, welche zur Laufzeit von einem Prozessor ausgelesen und abgearbeitet werden (siehe dazu auch die exemplarisch angeführten Code-Segmente in Fig. 4 und 5). Eine weitere Möglichkeit wäre, dafür eine SPS (Speicherprogrammierbare Steuerung) einzusetzen. Denkbar ist beispielsweise auch, dass die Erfindung mit Hilfe eines ASICs (Application Specific Integrated Circuit) umgesetzt wird. Dies sind selbstverständlich nur einige Beispiele von vielen Möglichkeiten, wie das erfindungsgemäße Verfahren umgesetzt werden kann und dienen daher bloß zur Illustration der Erfindung.

Selbstverständlich ist die Erfindung auch nicht an einen Rollenförderer gebunden. Vielmehr kann die Erfindung beispielsweise auch für Fördereinrichtungen angewandt werden, welche das Fördergut über Bänder oder Ketten fördern. Der Teilbereich, in dem ein Antrieb ein Fördergut transportiert ist dann jedoch anders, in der Regel größer.

Auch ist die Erfindung nicht an eine Motorrolle so wie in Fig. 2 dargestellt gebunden. Vielmehr kann der Antrieb der Rollen auch über (externe) Motoren erfolgen. Selbstverständlich ist der Antrieb mittels elektrischer Energie nicht zwingend für die Erfindung. Denkbar sind auch z.B. pneumatische oder hydraulische Antriebe. Schließlich sind auch Linearantriebe in Form von zum Beispiel Schiebern oder ähnlichem vorstellbar. Diese können ebenfalls elektrisch, pneumatisch oder hydraulisch betätigt werden.

Der Ordnung halber sei abschließend darauf hingewiesen, dass zum besseren Verständnis des Aufbaus der Fördereinrichtung 1 dieser bzw. dessen Bestandteile teilweise unmaßstäblich und/oder vergrößert und/oder zerkleinert dargestellt wurden.

**Bezugszeichenaufstellung**

| | | | |
|---|---|---|---|
| 1 | Fördereinrichtung | S₁₇ | Signatur Objekt 17 |
| 2, 2a..2c | Antrieb | S₁₈ | Signatur Objekt 18 |
| 3 | linker Rahmenteil | S₁₉ | Signatur Objekt 19 |
| 4 | rechter Rahmenteil | S₁₇₊₁₈ | Summensignatur Obj. 17/18 |
| 5 | Motorrolle | t | Zeit |
| | | | |
| 6 | Riemen | t(a₁₇), t(a₁₈) | Durchlaufzeit Objektlücke |
| 7 | Hilfsrolle | t(f) | Verzögerung Positionsfehler |
| 8 | Achse | t(x) | Erfassungszeitspanne |
| 9 | linkes Lager | t(y) | Verzögerung Charakteristika |
| 10 | rechtes Lager | W | Wert |
| | | | |
| 11 | äußerer Mantel | W₁ | erster Wert / erste Werte |
| 12 | Statorwicklung | W₂ | zweiter Wert / zweite Werte |
| 13 | linker Deckel | x | Erfassungsabstand |
| 14 | rechter Deckel | y | Abstand Charakteristika |
| 15 | Antriebssteuerung | z | Förderrichtung |
| | | | |
| 16 | Anschlusskabel | λ | Wellenlänge |
| 17..19 | (Förder)Objekte | | |
| 20 | erster Sensor | | |
| 21 | zweiter Sensor | | |
| 22 | Laser-Scanner | | |
| | | | |
| A₁ | Soll-Abfolge | | |
| A₂ | Ist-Abfolge | | |
| a₁₇ | Abstand Objekt 17, 18 | | |
| a₁₈ | Abstand Objekt 18, 19 | | |
| a₁₇₋₁₉ | Abstand Objekt 17, 19 | | |
| | | | |
| B₁ | erster Erfassungsbereich | | |
| B₂ | zweiter Erfassungsbereich | | |
| C₁ | erster Abweichungsbereich | | |
| C₂ | zweiter Abweichungsbereich | | |
| C₃ | dritter Abweichungsbereich | | |
| | | | |
| f | Positionsfehler | | |
| K | Knoten | | |
| n₁ | Soll-Anzahl Objekte | | |
| n₂ | Ist-Anzahl Objekte | | |
| P₁ | erste Position | | |
| | | | |
| P₂ | zweite Position | | |
| P₃ | dritte Position | | |
| P₄ | vierte Position | | |
| P₅ | fünfte Position | | |
| S | Weg | | |

## Patentansprüche

1. Verfahren zum Betrieb einer Fördereinrichtung (1), welche mehrere, in einer Förderrichtung (z) örtlich hintereinander liegende Antriebe (2, 2a..2c) zum Transport von Objekten (17..19) umfasst, durch die ein Soll-Weg und/oder eine Soll-Geschwindigkeit der Objekte (17..19) vorgegeben wird, **gekennzeichnet durch** die Schritte:
- Erfassen zumindest eines ersten Wertes (W₁) zumindest einer physikalischen Eigenschaft der Objekte (17..19) zu einem ersten Zeitpunkt (t₁) an einer ersten Position (P₁) ,
- Erfassen zumindest eines zweiten Wertes (W₂) dieser zumindest einen physikalischen Eigenschaft der Objekte (17..19) nach einer Erfassungszeitspanne (t(x)) zu einem zweiten Zeitpunkt (t₂) an einer zweiten Position (P₂), welche in der Förderrichtung (z) gesehen in einem Erfassungsabstand (x) hinter der ersten Position (P₁) angeordnet ist, und
- Durchführen einer Plausibilitätsprüfung im Hinblick auf die Übereinstimmung des ersten Wertes (W₁) mit dem zweiten Wert (W₂) sowie der zwischen der Erfassung des ersten Wertes (W₁) und des zweiten Wertes (W₂) mutmaßlich erfolgten Ortsveränderung der Objekte (17..19) basierend auf a) dem über die Antriebe (2, 2a..2c) vorgegebenen Soll-Weg und/oder b) der über die Antriebe (2, 2a..2c) vorgegebenen Soll-Geschwindigkeit in Verbindung mit der Erfassungszeitspanne (t(x)).

2. Verfahren nach Anspruch 1, **dadurch gekennzeichnet, dass** die Plausibilitätsprüfung nicht auf Objekt-Identität sondern auf Objekt-Gleichartigkeit durchgeführt wird.

3. Verfahren nach einem der vorgehenden Ansprüche, **dadurch gekennzeichnet, dass** in einem Initialisierungsschritt ein Initialisierungswert der zumindest einen physikalischen Eigenschaft bestimmt wird und ein Erfassungsbereich (B₁, B₂), in dem die zumindest eine physikalische Eigenschaft erfasst wird, als von einem Objekt (17..19) belegt klassifiziert wird, wenn die Abweichung zwischen dem ersten/zweiten Wert (W₁, W₂) vom Initialisierungswert größer ist als ein vorgebbarer Schwellwert.

4. Verfahren nach den Ansprüchen 2 und 3, **dadurch gekennzeichnet, dass** aus den Belegungszuständen eine Anzahl von Objekten (17..19), welche den Erfassungsbereich (B₁, B₂) passieren, ermittelt wird und die Plausibilitätsprüfung auf Basis der Anzahl gleichartiger Objekte (17..19) durchgeführt wird.

5. Verfahren nach einem der vorgehenden Ansprüche, **dadurch gekennzeichnet, dass** die Antriebe (2, 2a..2c) von einer Antriebssteuerung gesteuert oder geregelt werden und dass anstelle des von den Antrieben (2, 2a..2c) vorgegebenen Soll-Wegs und/oder der von den Antrieben (2, 2a..2c) vorgegebenen Soll-Geschwindigkeit der von der Antriebssteuerung vorgegeliene Soll-Weg und/oder die von der Antriebssteuerung vorgegebene Soll-Geschwindigkeit für die Plausibilitätsprüfung herangezogen wird.

6. Verfahren nacheinem der vorgehenden Ansprüche, **dadurch gekennzeichnet, dass** elektromagnetische Wellen im sichtbaren oder unsichtbaren Wellenlängenbereich verwendet werden und eine oder mehrere der physikalischen Eigenschaften: Grauwert, Farbe, Schwarz-Weiß-Abbild, Grauwert-Abbild, Farb-Abbild des zumindest einen Objekts (17..19) vorgesehen sind und ein negativer Ausgang der Plausibilitätsprüfung die Anzeige erster Bilddaten, welche zu diesem negativen Ausgang geführt haben oder solchen Werten (W₁, W₂). zugeordnet sind, sowie die Anzeige zweiter Bilddaten, welche benachbart zu den ersten Bilddaten sind, bewirkt.

7. Verfahren nach einem der vorgehenden Ansprüche, **dadurch gekennzeichnet, dass**
- an der ersten Position (P₁) eine Soll-Abfolge (A₁) an ersten Werten (W₁) der zumindest einen physikalischen Eigenschaft erfasst wird,
- an der zweiten Position (P₂) eine Ist-Abfolge (A₂) an zweiten Werten (W₂) dieser zumindest einen physikalischen Eigenschaft erfasst wird,
- die Ist-Abfolge (A₂) mit der Soll-Abfolge (A₁) verglichen wird und
- eine Fehlerbehandlung eingeleitet wird, wenn die ermittelte Abweichung eine vorgebbare Schwelle über- oder unterschreitet.

8. Verfahren nach Anspruch 7, **dadurch gekennzeichnet, dass** ein Teilen oder Zusammenführen von Objekt-Strömen an einem Knoten (K) der Fördereinrichtung (1) bei der Plausibilitätsprüfung berücksichtigt wird und die Ist-Abfolge (A₂) oder die Soll-Abfolge (A₁)
- zumindest einen Sensor (20..22), welcher dazu eingerichtet ist:
zumindest einen ersten Wert (W₁) zumindest einer physikalischen Eigenschaft der Objekte (17..19) zu einem ersten Zeitpunkt (t₁) an einer ersten Position (P1) zu erfassen und
zumindest einen zweiten Wert (W₂) dieser zumindest einen physikalischen Eigenschaff der Objekte (17..19) nach einer Erfassungszeitpanne (t(x)) zu einem zweiten Zeitpunkt (t₂) an einer zweiten Position (P₂), welche in der Förderrichtung (z) gesehen in einem Erfassungsabstand (x) hinter der ersten Position (P₁) angeordnet ist, zu erfassen und
- Mittel , welche dazu eingerichtet sind, eine lausibilitätsprüfung im Hinblick auf die Übereinstimmung des ersten Wertes (W₁) mit dem zweiten Wert (W₂) sowie der zwischen der Erfassung des ersten Wertes (W₁) und des zweiten Wertes (W₂) mutmaßlich erfolgten Ortsveränderung der Objekte (17..19) basierend auf a) dem über die Antriebe (2. 2a..2c) vorgegebenen Soll-Weg und/oder b) der über die Antriebe (2. 2a..2c) vorgegebenen Soll-Geschwindigkeit in Verbindung mit der Erfassungszeitspanne (t(x)) aufgrund von Routing-Daten der Objekte (17..19) modifiziert wird, wenn zwischen der ersten Position (P₁) und der zweiten Position (P₂) ein Knoten (K) der Fördereinrichtung (1) liegt.

9. Verfahren nach einem der Ansprüche 7 oder 8, **dadurch gekennzeichnet, dass** beim Vergleichen der Ist-Abfolge (A₂) mit der Soll-Abfolge (A₁) eine auf dem Erfassungsabstand (x) oder der Erfassungszeitspanne (t(x)) basierende Verschiebung unberücksichtigt bleibt.

10. Verfahren nach einem der Ansprüche 7 oder 8, **dadurch gekennzeichnet, dass** beim Vergleichen der Ist-Abfolge (A₂) mit der Soll-Abfolge (A₁) eine Verschiebung (y, t_{(y)}) zwischen einem Charakteristikum in der Soll-Abfolge (A₁) und demselben Charakteristikum in der Ist-Abfolge (A₂) unberücksichtigt bleibt.

11. Verfahren nach einem der Ansprüche 7 bis 10, **dadurch gekennzeichnet, dass** die Soll-Abfolge (A₁) und Ist-Abfolge (A₂) mit Hilfe einer Korrelationsfunktion verglichen werden.

12. Verfahren nach einem der Ansprüche 7 bis 11, **dadurch gekennzeichnet, dass** eine Signatur (S₁₇, S₁₈, S₁₉) der Objekte (17..19) beim Vergleichen der Ist-Abfolge (A₂) mit der Soll-Abfolge (A₁) unberücksichtigt bleibt.

13. Verfahren nach einem der Ansprüche 7 bis 11, **dadurch gekennzeichnet, dass** der Abstand (a₁₇, a₁₈) zwischen den Objekten (17..19) beim Vergleichen der Ist-Abfolge (A₂) mit der Soll-Abfolge (A₁) unberücksichtigt bleibt.

14. Verfahren nach einem der Ansprüche 7 bis 13, **dadurch gekennzeichnet, dass** eine Soll-Abfolge (A₁) derart vorgegeben wird, dass deren Wellenlänge (λ) beziehungsweise Periodendauer größer ist als ein vorgebbarer Wert.

15. Fördereinrichtung (1), umfassen:
- mehrere, in einer Förderrichtung (z) örtlich hintereinander liegende Antriebe (2, 2a..2c) zum Transport von Objekten (17..19), durch die ein Soll-Weg und/oder eine Soll-Geschwindigkeit der Objekte (17..19) vorgegeben wird,

## Claims

1. A method for operating a conveyor device (1), which comprises a plurality of drives (2, 2a...2c) located locally in succession in a conveying direction (z) for transporting objects (17... 19), by means of which a target path and/or a target speed of the objects (17... 19) is provided, **characterized by** the steps:
- detecting at least a first value (W₁) of at least one physical characteristic of the objects (17... 19) at a first point in time (t₁) at a first position (P₁),
- detecting at least a second value (W₂) of this at least one physical characteristic of the objects (17... 19) after a detection time period (t(x)) at a second point in time (t₂) at a second position (P₂), which is arranged at a detection distance (x) downstream from the first position (P₁), viewed in the conveying direction (z), and
- carrying out a plausibility check with regard to the conformance of the first value (W₁) with the second value (W₂) as well as the change of location of the objects (17... 19), which presumably occurred between the detection of the first value (W₁) and the second value (W₂), based on a) the target path provided via the drives (2, 2a...2c) and/or b) the target speed provided via the drives (2, 2a...2c) in combination with the detection time period (t(x)).

2. The method according to claim 1, **characterized in that** the plausibility check is not carried out with regard to object identity, but with regard to object similarity.

3. The method according to one of the preceding claims, **characterized in that** an initialization value of the at least one physical characteristic is determined in an initialization step, and a detection area (B₁, B₂), in which the at least one physical characteristic is detected, is classified as being occupied by an object (17... 19), when the deviation between the first/second value (W₁, W₂) from the initialization value is greater than a presettable threshold value.

4. The method according to claims 2 and 3, **characterized in that** a number of objects (17... 19), which pass through the detection area (B₁, B₂), is determined from the occupation states, and the plausibility check is carried out on the basis of the number of similar objects (17... 19).

5. The method according to one of the preceding claims, **characterized in that** the drives (2, 2a...2c) are controlled or regulated by a drive control and that the target path provided by the drive control and/or the target speed provided by the drive control is used instead of the target path provided by the drives (2, 2a...2c) and/or the target speed provided by the drives (2, 2a...2c) for the plausibility check.

6. The method according to one of the preceding claims, **characterized in that** electromagnetic waves in the visible or invisible wavelength range are used and one or a plurality of the physical characteristics: gray value, color, black-and-white image, gray value image, color image of the at least one object (17... 19) are provided and a negative outcome of the plausibility check effects the display of first image data, which have caused said negative outcome, or are assigned to such values (W₁, W₂), and effects the display of second image data, which are adjacent to the first image data.

7. The method according to one of the preceding claims, **characterized in that**
- a target sequence (A₁) of first values (W₁) of the at least one physical characteristic is detected at the first position (P₁),
- an actual sequence (A₂) of second values (W₂) of this at least one physical characteristic is detected at the second position (P₂),
- the actual sequence (A₂) is compared to the target sequence (A₁) and
- an error correction is initiated, when the detected deviation exceeds or falls below a presettable threshold value.

8. The method according to claim 7, **characterized in that** a dividing or merging of object flows at a node (K) of the conveyor device (1) is considered in the plausibility check and the actual sequence (A₂) or the target sequence (A₁) is modified on the basis of routing data of the objects (17... 19), when a node (K) of the conveyor device (1) is located between the first position (P₁) and the second position (P₂).

9. The method according to one of claims 7 or 8, **characterized in that** a shift, which is based on the detection distance (x) or the detection time period (t(x)) is disregarded when comparing the actual sequence (A₂) to the target sequence (A₁).

10. The method according to one of claims 7 or 8, **characterized in that** a shift (y, t_{(y)}) between a feature in the target sequence (A₁) and the same feature in the actual sequence (A₂) is disregarded when comparing the actual sequence (A₂) to the target sequence (A₁).

11. The method according to one of claims 7 to 10, **characterized in that** the target sequence (A₁) and actual sequence (A₂) are compared with the help of a correlation function.

12. The method according to one of claims 7 to 11, **characterized in that** a signature (S₁₇, S₁₈, S₁₉) of the objects (17... 19) is disregarded when comparing the actual sequence (A₂) to the target sequence (A₁).

13. The method according to one of claims 7 to 11, **characterized in that** the distance (a₁₇, a₁₈) between the objects (17... 19) is disregarded when comparing the actual sequence (A₂) to the target sequence (A₁).

14. The method according to one of claims 7 to 13, **characterized in that** a target sequence (A₁) is provided in such a manner that the wavelength (λ) or period time thereof, respectively, is greater than a presettable value.

15. A conveyor device (1), comprising:
- a plurality of drives (2, 2a...2c) located locally in succession in a conveyor device (z) for transporting objects (17... 19), by means of which a target path and/or a target speed of the objects (17...19) is provided,
- at least one sensor (20...22), which is equipped to:
detect at least a first value (W₁) of at least one physical characteristic of the objects (17... 19) at a first point in time (t₁) at a first position (P₁), and
detect at least a second value (W₂) of this at least one physical characteristic of the objects (17... 19) after a detection time period (t(x)) at a second point in time (t₂) at a second position (P₂), which is arranged at a detection distance (x) downstream from the first position (P₁), viewed in the conveying direction (z), and
- means, which are equipped to carry out a plausibility check with regard to the conformance of the first value (W₁) with the second value (W₂) as well as the change of location of the objects (17... 19), which presumably occurred between the detection of the first value (W₁) and the second value (W₂), based on a) the target path provided via the drives (2, 2a...2c) and/or b) the target speed provided via the drives (2, 2a...2c) in combination with the detection time period (t(x)).

## Revendications

1. Procédé pour faire fonctionner un dispositif d'acheminement (1) qui comprend plusieurs entraînements (2, 2a ... 2c) pour le transport d'objets (17 ... 19), situés, en ce qui concerne leur localisation, les uns derrière les autres dans une direction d'acheminement (z), par lesquels entraînements sont prédéterminés, pour les objets (17 ... 19), un chemin de consigne et/ou une vitesse de consigne, **caractérisé par** les étapes :
- saisir au moins une première valeur (W₁) d'au moins une caractéristique physique des objets (17 ... 19) à un premier moment (t₁) dans une première position (P₁),
- saisir au moins une deuxième valeur (W₂) de ladite au moins une caractéristique physique des objets (17 ... 19), après un laps de temps de saisie (t(x)), à un deuxième moment (t₂) dans une deuxième position (P₂) qui est située, vue dans la direction d'acheminement (z), à une distance de saisie (x) en aval de la première position (P₁), et
- effectuer un test de plausibilité concernant la concordance de la première valeur (W₁) avec la deuxième valeur (W₂) et celle du déplacement des objets (17 ... 19) ayant vraisemblablement eu lieu entre la saisie de la première valeur (W₁) et de la deuxième valeur (W₂), sur la base a) du chemin de consigne prédéterminé par les entraînements (2, 2a ... 2c) et/ou b) de la vitesse de consigne prédéterminée par les entraînements (2, 2a ... 2c), en combinaison avec le laps de temps de saisie (t(x)).

2. Procédé selon la revendication 1, **caractérisé en ce que** le test de plausibilité n'est pas effectué concernant l'identité des objets mais concernant une similitude des objets.

3. Procédé selon l'une des revendications précédentes, **caractérisé en ce que**, dans une étape d'initialisation, une valeur d'initialisation de ladite au moins une caractéristique physique est déterminée et **en ce qu'**une zone de saisie (B₁, B₂) dans laquelle ladite au moins une caractéristique physique est saisie, est classée comme occupée par un objet (17 ... 19) lorsque la différence entre respectivement la première/deuxième valeur (W₁, W₂) et la valeur d'initialisation est supérieure à une valeur seuil qui peut être prédéterminée.

4. Procédé selon les revendications 2 et 3, **caractérisé en ce que**, à partir des états d'occupation, il est déterminé une quantité d'objets (17 ... 19) qui passent la zone de saisie (B₁, B₂) et que le test de plausibilité est effectué sur la base de la quantité d'objets semblables (17 ... 19).

5. Procédé selon l'une quelconque des revendications précédentes, **caractérisé en ce que** les entraînements (2, 2a ... 2c) sont commandés ou réglés par une commande d'entraînement et **en ce que**, à la place du chemin de consigne et/ou de la vitesse de consigne prédéterminés par les entraînements (2, 2a ... 2c), il est utilisé, pour le test de plausibilité, le chemin de consigne prédéterminé par la commande d'entraînement et/ou la vitesse de consigne prédéterminée par la commande d'entraînement.

6. Procédé selon l'une quelconque des revendications précédentes, **caractérisé en ce que** des ondes électromagnétiques dans la plage de longueurs d'ondes visible ou invisible sont utilisées et qu'une ou plusieurs caractéristiques physiques dudit au moins un objet (17 ... 19) sont prévues, à savoir niveau de gris, couleur, image en noir et blanc, image en niveaux de gris, image en couleurs dudit au moins un objet (17 ... 19) et **en ce qu'**un résultat négatif du test de plausibilité cause l'affichage de premières données d'image ayant conduit à ce résultat négatif ou étant associées à de telles valeurs (W₁, W₂) ainsi que l'affichage de deuxièmes données d'image qui sont avoisinantes aux premières données d'image.

7. Procédé selon l'une quelconque des revendications précédentes, **caractérisé en ce que**
- dans la première position (P₁), une suite de valeurs de consigne (A₁) de premières valeurs (W₁) de ladite au moins une caractéristique physique est saisie,
- dans la deuxième position (P₂), une suite de valeurs réelles (A₂) de deuxièmes valeurs (W₂) de ladite au moins une caractéristique physique est saisie,
- la suite de valeurs réelles (A₂) est comparée à la suite de valeurs de consigne (A₁) et
- un traitement d'erreurs est déclenché lorsque la différence constatée est supérieure ou inférieure à une valeur de seuil pouvant être prédéterminée.

8. Procédé selon la revendication 7, **caractérisé en ce qu'**une division ou une jonction de flux d'objets à un noeud (K) du dispositif d'acheminement (1) est prise en compte lors du test de plausibilité et **en ce que** la suite de valeurs réelles (A₂) ou la suite de valeurs de consigne (A₁) est modifiée sur la base de données de routage des objets (17 ... 19) lorsqu'un noeud (K) du dispositif d'acheminement (1) est situé entre la première position (P₁) et la deuxième position (P₂).

9. Procédé selon l'une quelconque des revendications 7 ou 8, **caractérisé en ce que**, lors de la comparaison de la suite de valeurs réelles (A₂) avec la suite de valeurs de consigne (A₁), un décalage basé sur la distance de saisie (x) ou le laps de temps de saisie (t(x)) n'est pas pris en compte.

10. Procédé selon l'une quelconque des revendications 7 ou 8, **caractérisé en ce que**, lors de la comparaison de la suite de valeurs réelles (A₂) avec la suite de valeurs de consigne (A₁), un décalage (y, t(_{y})) entre une caractéristique dans la suite de valeurs de consigne (A₁) et la même caractéristique dans la suite de valeurs réelles (A₂) n'est pas pris en compte.

11. Procédé selon l'une quelconque des revendications 7 à 10, **caractérisé en ce que** la suite de valeurs de consigne (A₁) et la suite de valeurs réelles (A₂) sont comparées à l'aide d'une fonction de congélation.

12. Procédé selon l'une quelconque des revendications 7 à 11, **caractérisé en ce que**, lors de la comparaison de la suite de valeurs réelles (A₂) avec la suite de valeurs de consigne (A₁), une signature (S₁₇, S₁₈, S₁₉) des objets (17 ... 19) n'est pas prise en compte.

13. Procédé selon l'une quelconque des revendications 7 à 11, **caractérisé en ce que**, lors de la comparaison de la suite de valeurs réelles (A₂) avec la suite de valeurs de consigne (A₁), la distance (a₁₇, a₁₈) entre les objets (17 ... 19) n'est pas prise en compte.

14. Procédé selon l'une quelconque des revendications 7 à 13, **caractérisé en ce qu'**une suite de valeurs de consigne (A₁) est prédéterminée de manière que leur longueur d'onde (λ) ou une durée de période est supérieure à une valeur pouvant être prédéterminée.

15. Dispositif d'acheminement (1) comprenant
- plusieurs entraînements (2, 2a ... 2c) pour le transport d'objets (17 ... 19), situés, en ce qui concerne leur localisation, les uns derrière les autres dans une direction d'acheminement (z), par lesquels entraînements sont prédéterminés, pour les objets (17 ... 19), un chemin de consigne et/ou une vitesse de consigne,
- au moins un capteur (20, 22) qui est adapté pour
saisir au moins une première valeur (W₁) d'au moins une caractéristique physique des objets (17 ... 19) à un premier moment (t₁) dans une première position (P₁) et saisir au moins une deuxième valeur (W₂) de ladite au moins une caractéristique physique des objets (17 ... 19), après un laps de temps de saisie (t(x)), à un deuxième moment (t₂) dans une deuxième position (P₂) qui est située, vue dans la direction d'acheminement (z), à une distance de saisie (x) en aval de la première position, et
- des moyens qui sont adaptés pour effectuer un test de plausibilité concernant la concordance de la première valeur (W₁) avec la deuxième valeur (W₂) et celle du déplacement des objets (17 ... 19) ayant vraisemblablement eu lieu entre la saisie de la première valeur (W₁) et de la deuxième valeur (W₂), sur la base a) du chemin de consigne prédéterminé par les entraînements (2, 2a ... 2c) et/ou b) de la vitesse de consigne prédéterminée par les entraînements (2, 2a ... 2c), en combinaison avec le laps de temps de saisie (t(x)).
